# EUROPÄISCHE PATENTSCHRIFT

(11) **EP 2 880 093 B1**
(45) Veröffentlichungstag und Bekanntmachung des Hinweises auf die Patenterteilung: **23.03.2016**
(21) Anmeldenummer: 13756291.4
(22) Anmeldetag: 31.07.2013
(51) Int. Cl.: C08L 31/04, C08L 9/00

(54) **FLAMMGESCHÜTZTE POLYMERE ZUSAMMENSETZUNG**
FLAME-PROOFED POLYMERIC COMPOSITION
COMPOSITION POLYMÈRE IGNIFUGÉE

(30) Priorität: 02.08.2012 AT 503082012
(43) Veröffentlichungstag der Anmeldung: 10.06.2015
(73) Patentinhaber: BATEGU Gummitechnologie GmbH & Co KG, 1190 Wien (AT)
(72) Erfinder: MESTAN, Gerhard, 1210 Vienna (AT)
(74) Vertreter: Wildhack & Jellinek
(86) Internationale Anmeldenummer: PCT/AT2013/050149
(87) Internationale Veröffentlichungsnummer: WO 2014/019008

(56) Entgegenhaltungen:
- EP-A2- 0 357 322
- DE-A1- 4 129 741
- DE-A1-102009 060 440

## Beschreibung

Die Erfindung betrifft eine flammgeschützte polymere Zusammensetzung enthaltend ein Vinylacetat-haltiges thermoplastisches Polymer und ein ungesättigtes Elastomer als polymere Komponenten sowie zumindest ein Flammschutzmittel. Weiters betrifft die Erfindung ein Verfahren zur Herstellung dieser Zusammensetzung, aus dieser Zusammensetzung hergestellte Artikel sowie elastische Verbundelemente mit einem Grundkörper, der zumindest teilweise oder abschnittsweise an seiner äußeren Oberfläche mit einer Beschichtung aus dieser Zusammensetzung versehen ist.

Elastische Elemente, beispielsweise aus Gummi bzw. Kautschuk, weisen von sich aus keine flammhemmenden bzw. brandhemmenden Eigenschaften auf, wie sie in einigen Einsatzzwecken teilweise auf Basis von Normen bzw. gesetzlichen Bestimmungen gefordert werden. Es ist aber bekannt, Elastomeren bzw. Gummi oder Naturkautschuk Flammschutzmittel bzw. brandhemmende Mittel beizumengen, wobei jedoch durch die Beimengung derartiger Zusätze die elastischen Eigenschaften üblicherweise stark beeinträchtigt werden und somit ein derartiges aus Gummi bzw. Kautschuk bestehendes Element die geforderten elastischen Eigenschaften im Hinblick auf gewünschte statische und dynamische Eigenschaften nicht bzw. nicht mehr erfüllen kann. Bei einer Verwendung als Federelement oder Dämpfungselement oder einem ähnlichen, üblicherweise hochdynamisch belasteten Element, beispielsweise bei Fahrzeugen, können mit bekannten elastischen Elementen somit die geforderten brandschutztechnischen Bestimmungen nicht zufriedenstellend erfüllt werden.

Deshalb wurde dazu übergegangen, flammschutzhemmende Beschichtungen vorzusehen, den durch die Beschichtung geschützten Grundkörper jedoch frei von Flammschutzmitteln zu halten. Derartige Verbundelemente sind beispielsweise in der DE 38 31 894 A1 oder der WO 2010/069842 beschrieben.

Wesentlich für die Eigenschaften eines Elastomers ist das Vernetzungssystem. Erst durch das Vernetzungssystem wird der fließfähige Kautschuk in ein elastomeres Material verwandelt, das über die typischen elastomeren Eigenschaften verfügt, wodurch sich auch die grundlegenden Unterschiede zu thermoplastischen Polymeren ergeben. Über die Art der Vernetzungsbrücken und die Netzwerkdichte wird Einfluss auf Härte, Modul, Festigkeit, Bruchdehnung, Weiterreißwiderstand, Elastizität und auf die Grenzen der mechanischen und thermischen Belastbarkeit genommen.

Aus dem Stand der Technik sind weiters polymere, ein Flammschutzmittel enthaltende Zusammensetzungen bekannt, beispielsweise Mischungen aus Ethylenvinylacetat mit Ethylen-Propylen-Dien-Monomer-Kautschuk. Diese Mischungen sind entweder silanvernetzt, in den meisten Fällen erfolgt die Vernetzung allerdings peroxidisch oder durch Bestrahlung. Derartige Mischungen werden vor allem bei der Ummantelung von Kabeln oder elektrischen Leitungen eingesetzt. So sind beispielsweise in der EP 2 343 334 A2 flammgeschützte Zusammensetzungen aus EVA, EPDM und LLDPE beschrieben, die ein durch Di-Cumylperoxid gebildetes, peroxidisches Vernetzungssystem aufweisen. Peroxide werden häufig zur Vernetzung von Kautschuken eingesetzt. Die Peroxidvernetzung ist die typische Vernetzungsart, wenn es darum geht, Kautschuke zu vernetzen, die über keine Doppelbindungen verfügen und/oder wenn es darum geht, eine besonders hohe Vernetzungsdichte und Engmaschigkeit des Netzwerkes zu erreichen, die wiederum die mechanischen Kennwerte wie den Druckverformungsrest, insbesondere bei erhöhten Temperaturen, positiv beeinflusst. Die meist hohe Vernetzungsdichte und die kurzen Vernetzungsbrücken haben gewöhnlich eine geringere Reißdehnung im Vergleich zu Materialien gleicher Härte zur Folge. Werden die Oberflächen der Produkte nicht mehr bearbeitet, erfordert die Peroxidvernetzung beim Vernetzungsvorgang den Ausschluss von Luftsauerstoff.

Derartige Vernetzungssysteme sind allerdings für die elastischen und dynamischen Eigenschaften nachteilig, vor allem dann, wenn zusätzlich auch große Mengen an Flammschutzmittel enthalten sind.

Die Erzielung der Schwerentflammbarkeit, insbesondere nach der Norm CEN TS 45545-2, mit den damit verbundenen hohen Anforderungen bezüglich Flammenausbreitung, optischer Rauchdichte, Rauchgastoxizität und Wärmefreisetzungsrate, erfordert ein besonderes Augenmerk bei der Auswahl der Polymere. Die Anforderungen hinsichtlich Rauchdichte und Toxizität schließen beispielsweise die Anwendung halogenhaltiger Polymere aus.

Es ist damit Aufgabe der Erfindung, diese Nachteile zu überwinden und ein flammgeschütztes polymeres Material zu schaffen, das außergewöhnliche brandschutztechnische Eigenschaften in Kombination mit guten mechanischen Kennwerten aufweist, dass also trotz eines hohen Füllungsgrades mit Flammschutzmitteln immer noch gute mechanische, elastische und dynamische Eigenschaften besitzt.

Diese Aufgabe wird durch die Merkmale des Anspruchs 1 gelöst. Dabei ist erfindungsgemäß vorgesehen, dass die flammgeschützte polymere Zusammensetzung zumindest ein Vinylacetat-haltiges thermoplastisches Polymer sowie zumindest ein Doppelbindungen-enthaltendes, ungesättigtes Elastomer, als polymere Komponenten enthält, wobei die polymeren Komponenten als homogene Polymermischung vorliegen. Die Polymermischung ist dabei nicht peroxidisch, sondern ausschließlich als eine durch ein Schwefel- bzw. schwefelhaltiges Vernetzungssystem vulkanisierte Mischungsmatrix ausgebildet, wobei sich das Schwefelvernetzungssystem über die gesamte Matrix erstreckt und diese vollständig durch und durch durchsetzt bzw. durchzieht bzw. die Schwefelbrücken ziehen sich durch die gesamte Matrix hindurch. Weiters ist zumindest ein Flammschutzmittel oder eine Kombination von Flammschutzmitteln enthalten.

Die Wahl dieses Vernetzungstyps bewirkt eine spezielle teilweise Vernetzung des Kautschukverschnittes bzw. der Mischung. Aufgrund dessen, dass sich das vinylacetathaltige Polymer nicht mit Schwefel vernetzen lässt und dieser Anteil des Polymers unvernetzt vorliegt, wird überraschenderweise eine sehr hohe Füllbarkeit des Gesamtsystems mit Flammschutzmitteln ermöglicht, wobei gleichzeitig die kautschuktypischen Eigenschaften, insbesondere hohe reversible Dehnbarkeit, nur gering beeinflusst werden. Gleichzeitig leistet der unvernetzte Polymeranteil seinen Beitrag zum Flammschutz.

Dadurch wird eine Zusammensetzung erhalten, die ein damit beschichtetes dynamisch beanspruchtes Bauteil so schützt, dass das gesamte Bauteil ausreichend flammgeschützt ist und insbesondere die Brandschutznorm CEN TS 45545-2 erfüllt, ohne dass die Beschichtung die dynamischen Eigenschaften des Verbundelements in der Zeit der Lebensdauer merkbar negativ beeinflusst.

Hierin besteht auch ein wesentlicher Unterschied zu dynamisch vernetzten thermoplastischen Elastomeren (TPE-V). Hierbei handelt es sich um zweiphasige Systeme, bei denen in einer kontinuierlichen thermoplastischen Matrix fein dispergierte vernetzte Kautschukpartikel eingelagert sind. Im Unterschied dazu ist die erfindungsgemäße Polymermischung homogen und die polymeren Komponenten sind innig miteinander vermischt und bilden eine möglichst einheitliche Mischungsmatrix. Außerdem sind bei vernetzten, thermoplastischen Elastomeren ausschließlich die dispergierten Kautschukpartikel als solche vernetzt und es bestehen in der Regel keine Schwefelbrücken zwischen den Elastomerpartikeln. Im Unterschied dazu ist bei der erfindungsgemäßen Zusammensetzung ein die Matrix vollständig, durch und durch durchdringendes Schwefelvernetzungssystem ausgebildet. Hier bilden sich entsprechende Schwefelbrücken mit einem oder mehreren Schwefelatomen und gegebenenfalls Verzweigungen zwischen den in der Matrix vorliegenden Ketten des ungesättigten Elastomers. Zwischen den Vinylacetat-haltigen Polymerketten können sich keine Schwefelbrücken ausbilden, da keine Doppelbindungen vorhanden sind. Die Vinylacetat-haltigen Polymerketten bleiben unvernetzt und werden insbesondere auch nicht anders, z.B. peroxidisch oder durch Strahlung vernetzt. Dadurch wird eine gute Befüllbarkeit gewährleistet. Trotzdem erstreckt sich das Schwefelvernetzungssystem über die gesamte Matrix und die Schwefelbrücken ziehen sich durch die gesamte Matrix hindurch und umspannen auch die Anteile und Ketten des Vinylacetat-haltigen Polymers. Auf dieser Weise bleiben die elastomeren Eigenschaften erhalten bzw. ist der gesamte Werkstoff der Zusammensetzung als Elastomer zu betrachten. Die thermoplastischen Eigenschaften treten aufgrund der vollständigen Schwefelvernetzung in den Hintergrund bzw. sind überhaupt nicht vorhanden.

Auf diese Weise wird ein insbesondere als Beschichtung vorteilhaft einsetzbarer Werkstoff geschaffen, der außergewöhnliche brandschutztechnische Eigenschaften besitzt und gleichzeitig gute mechanische Kennwerte aufweist, so dass die dynamischen Eigenschaften eines mit dieser Beschichtung beschichteten Bauteils in der Zeit der Lebensdauer nicht merkbar negativ beeinflusst werden.

Weitere vorteilhafte Ausgestaltungen und Weiterentwicklungen der Zusammensetzung ergeben sich durch die Merkmale der abhängigen Ansprüche.

So ist es vorteilhaft, wenn in der Polymermischung der Anteil des Vinylacetat-haltigen thermoplastischen Polymers unvernetzt vorliegt und der Anteil des Doppelbindungen-enthaltenden, ungesättigten Elastomers zumindest teilweise schwefelvulkanisiert und durch Schwefelbrücken, insbesondere mono-, di- und/oder polysulfidische Netzbögen, vernetzt oder teilvernetzt ist, wobei die Polymermischung frei von anderen, insbesondere von peroxidischen, Vernetzungen ist und bleibt. Dadurch wird eine noch bessere Füllbarkeit mit Flammschutzmitteln bewirkt bei gleichzeitiger Beibehaltung der vorteilhaften dynamischen Eigenschaften, insbesondere einer hohen, reversiblen Dehnbarkeit.

Gemäß einer vorteilhaften Ausgestaltung ist vorgesehen, dass die Schwefelbrücken sowohl als polysulfidische als auch als mono- und di-sulfidische Netzbögen ausgebildet sind, wobei der Anteil der polysulfidischen Netzbögen zwischen 40 % und 50 %, vorzugsweise 45 %, und der Anteil der mono- und di-sulfidischen Netzbögen zwischen 50 % und 60 %, vorzugsweise 55 %, beträgt. Die Prozentangaben beziehen sich dabei auf die Gesamtnetzbogendichte in mol/cm³. Das prozentuelle Verhältnis des Anteils der polysulfidischen Netzbögen zum Anteil der mono- und disulfidischen Netzbögen liegt also bei 40 bis 50 : 50 bis 60, insbesondere bei 45 : 55. Auf diese Weise lassen sich hohe Befüllungsgrade und gute elastomere Eigenschaften erreichen.

Wenn bzw. dadurch dass vorgesehen ist, dass die polymeren Komponenten miteinander eine im Wesentlichen, insbesondere sowohl makroskopisch als auch lichtmikroskopisch, einphasige und homogene Mischung bilden, insbesondere ohne mit dem freien Auge und/oder lichtmikroskopisch sichtbare Phasentrennung, ergeben sich besonders vorteilhafte mechanische Eigenschaften des Polymers, insbesondere hinsichtlich des elastisch-dynamischen Charakters. Darunter wird hier verstanden, dass die Mischung vorteilhafterweise so einphasig ist, dass in der Mischung und/oder in der finalen Zusammensetzung keine Elastomerpartikel mit einem mittleren Teilchendurchmesser von mehr als 0,5 µm, insbesondere von mehr als 0,1 µm, vorzugsweise mehr als 0,01 µm, und/oder keine Kautschukdomänen mit einem mittleren Durchmesser von mehr als 0,5 µm, insbesondere von mehr als 0,1 µm, vorzugsweise mehr als 0,01 µm, vorliegen. Insbesondere liegen gar keine erkennbaren oder detektierbaren Polymerpartikel oder Kautschukdomänen vor.

In diesem Zusammenhang ist es besonders vorteilhaft, wenn bzw. dass die vulkanisierte Polymermischung ausschließlich elastomere und keine thermoplastischen Eigenschaften aufweist bzw. wenn bzw. dass die vulkanisierte Polymermischung bzw. die Zusammensetzung sowohl im Temperaturbereich der Anwendung als auch bis hin zu erhöhten Temperaturen, kurzfristig auch von 150 bis 200 °C, insbesondere überwiegend, elastomere Eigenschaften besitzt. Darin liegt auch ein wesentlicher Unterschied zu vernetzten thermoplastischen Elastomeren (TPE-V):

Durch dynamische Vulkanisation hergestellte vernetzte, thermoplastische Elastomere (TPE-V) besitzen im Anwendungsbereich bei geringeren Temperaturen, z.B. bei Raumtemperatur, weitgehend elastomere Eigenschaften und verhalten sich in diesem Bereich vergleichbar wie klassische Elastomere. Im Verarbeitungsbereich bei erhöhter Temperatur haben sie jedoch überwiegend thermoplastische Eigenschaften, sind dementsprechend fließfähig und plastisch verformbar bzw. warmumformbar und haben einen charakteristischen Schmelzpunkt bzw. Schmelzbereich bzw. Erweichungsbereich. Deren Eigenschaften sind hier durch die thermoplastische, unvernetzte, beispielsweise Polypropylen- oder Vinylacetat-, Polymermatrix bestimmt. Die darin eingebetteten, in-sich vernetzten Elastomer-Partikel bewirken gewisse elastische Eigenschaften, haben aber keinen wesentlichen Einfluss auf die Warmumformbarkeit und die Fließfähigkeit.

Die erfindungsgemäßen Zusammensetzungen besitzen hingegen über das gesamte relevante Temperaturspektrum hinweg, sowohl im Anwendungsbereich als auch im erhöhten Temperaturbereich, nahezu ausschließlich elastomere bzw. gummielastische Eigenschaften, da die dafür maßgeblichen Schwefelbrücken den Körper vollständig durchsetzen. Bei Temperaturerhöhung wird der Körper zwar weicher, wird jedoch niemals fließfähig, besitzt also keinen Schmelzpunkt oder -bereich. Die vulkanisierte Polymermischung bzw. die Zusammensetzung weist dementsprechend im Temperaturbereich bis 200 °C auch keinen Schmelzpeak, gemessen mit dynamischer Differenzkalorimetrie, auf. Auch ist nach erfolgter Vulkanisation keine Warmumformung und kein zweiter Formgebungsschritt möglich.

Thermoplastische Elastomere sind deshalb auch wesentlich weniger thermisch und dynamisch belastbar als die vorteilhaften erfindungsgemäßen Zusammensetzungen und neigen bei erhöhten Temperaturen zum Kriechen.

Eine vorteilhafte vulkanisierte Polymermischung bzw. die Zusammensetzung weist weiters in einem Temperaturbereich von Raumtemperatur bis ca. 200°C einen Verlustfaktor (Verhältnis von Verlust- zu Speichermodul bei dynamischer Scherbeanspruchung) von tan δ < 0,3, gemessen gemäß ISO 4664 "Elastomere oder thermoplastische Elastomere - Bestimmung der dynamischen Eigenschaften", auf. Dies zeigt, dass in einem Temperaturbereich, in dem TPE-Vs typischerweise verarbeitet werden, die elastischen Eigenschaften der erfindungsgemäßen Zusammensetzung im Vergleich zu den viskosen Eigenschaften überwiegen und damit keine weitere Formgebung mehr möglich ist.

Eine besonders vorteilhafte erfindungsgemäße Zusammensetzung wird hergestellt bzw. ist erhältlich durch Mischen der polymeren Komponenten zu einem homogenen Blend und insbesondere nachfolgender Einarbeitung der Schwefel-Vernetzungsmittel, der Flammschutzmittel und gegebenenfalls weiterer Additive und/oder Hilfsstoffe und zwar unter strenger Vermeidung jeglicher Vernetzung und/oder Vulkanisation, vorzugsweise bei einer Temperatur von maximal 110 °C. Erst danach erfolgt ein Formgebungsschritt und die Vulkanisation, insbesondere bei erhöhter Temperatur und gegebenenfalls unter Druck. Die Vulkanisation erfolgt nicht unter Scherbeanspruchung, also nicht während des intensiven Mischens, wie bei der dynamischen Vulkanisation.

Die Vulkanisationstemperatur liegt vorteilhafterweise, insbesondere bei EPDM/EVA, bei einer Temperatur von unter 200°C, vorzugsweise in einem Temperaturbereich von 130 bis 170 °C. Hierdurch besteht ein weiterer Unterschied zu vernetzten thermoplastischen Elastomeren, bei denen die Vernetzung mittels dynamischer Vulkanisation bereits während des Mischens bei höherer Temperatur und unter starker Scherbeanspruchung stattfindet. Im Unterschied dazu wird bei der erfindungsgemäßen Zusammensetzung eine Vulkanisation bereits während der Mischung vermieden und die Schwefelvernetzung erfolgt erst am Ende, insbesondere nach der Formgebung, bei erhöhter Temperatur, jedoch nicht unter Scherbeanspruchung. Auf diese Weise werden die kautschuktypischen Eigenschaften der Zusammensetzung auch bei hohem Flammschutzmittelgehalt positiv beeinflusst.

Die sich so vorteilhaft ergebende Zusammensetzung ist somit erhältlich durch "statische" Vulkanisation, insbesondere nach erfolgter Formgebung. Unter dem Begriff der statischen Vulkanisation wird im vorliegenden Fall eine Vulkanisation unter Vermeidung jeglicher Scherbeanspruchung bzw. unter Vermeidung von dynamischer Vulkanisation verstanden.

Erfindungsgemäß wird in diesem Zusammenhang auch ein Verfahren zur Herstellung einer vorteilhaften erfindungsgemäßen Zusammensetzung vorgeschlagen, wobei zuerst die polymeren Komponenten, das/die Schwefel-Vernetzungsmittel, das/die Flammschutzmittel und gegebenenfalls weitere Additive und Hilfsstoffe unter Vermeidung einer Vernetzung und/oder Vulkanisation zu einem homogenen Blend gemischt werden, und dann daran anschließend zumindest ein Schritt der Formgebung, beispielsweise durch Spritzen (IM) erfolgt. Erst danach, frühestens während oder am Ende der Formgebung, insbesondere nach vollständig abgeschlossener Formgebung, wird die Vulkanisation durchgeführt und zwar als statische, nicht-dynamische Vulkanisation unter Vermeidung von Scherspannung.

Besonders vorteilhaft zur Vermeidung einer verfrühten Vulkanisation ist es in diesem Zusammenhang, wenn der Schritt der Mischungserstellung vor der Formgebung unterhalb einer kritischen Temperatur und innerhalb einer kritischen Zeit, insbesondere bei einer Temperatur von maximal 125 °C, vorzugsweise im Bereich von 50 °C bis maximal 110 °C, durchgeführt wird. Der Blend bzw. de polymeren Komponenten liegen während der Mischungserstellung vorteilhafterweise in einem erweichten Zustand vor.

Eine weitere vorteilhafte Verfahrensführung, ebenfalls zur Vermeidung einer zu frühen Vernetzung bzw. Vulkanisation sieht vor, dass auch die Formgebung unterhalb einer kritischen Temperatur und innerhalb einer kritischen Zeit durchgeführt wird, insbesondere bei einer Temperatur von maximal 130 °C, insbesondere im Bereich von 70 °C bis 100 °C, erfolgt.

Die eigentliche Vulkanisation erfolgt dann vorteilhafterweise bei einer Temperatur von maximal 200 °C, insbesondere im Bereich von 130 °C bis 170 °C. Vorteilhafterweise erfolgt die Vernetzung bei einer im Vergleich zur Mischung und/oder Formgebung höheren Temperatur, insbesondere auch bei einem Druck von 100 bis 200 bar.

Durch diese Verfahrensschritte bzw. Verfahrensführung ergibt sich bzw. erhält man eine vorteilhafte Zusammensetzung, die die gewünschten Merkmale aufweist.

Im Vergleich zu erfindungsgemäßen Verfahren wird bei der bekannten "dynamischen Vulkanisation" eine derartige Polymermischung unter hoher Scherbeanspruchung gemischt und dabei gleichzeitig vulkanisiert, also noch vor der Formgebung. Auf diese Weise bilden sich kleine Tröpfchen aus dem ungesättigten Elastomer aus, in denen die Vernetzung stattfindet. Die intensive Bearbeitung unter hoher Scherbeanspruchung führt dabei zu einer dauernden Isolierung dieser Tröpfchen und bewirkt, dass sich zwischen den einzelnen Elastomertröpfchen keine Verbindungen bzw. Schwefelbrücken aufbauen. Es bildet sich auf diese Weise eine einheitliche, thermoplastische Matrix aus unvernetztem, Vinylacetat-haltigem Polymer, z.B. EVA, in das isolierte und in dieser thermoplastischen Matrix dispergierte Inselchen aus dem vulkanisierten Elastomer, z.B. EPDM, vorliegen. Zwischen den einzelnen separaten Elastomer-Partikeln bestehen keinerlei Verbindungen, insbesondere keine Schwefelnetzbögen. Damit gibt es auch keine Schwefelbrücken und kein Schwefelbrückennetzwerk, das sich durch die gesamte Matrix des so erhaltenen Mischkörpers durchziehen und diesen Körper vollständig durchsetzen würde, im Gegenteil, die Schwefelbrücken sind ausschließlich auf die jeweiligen Elastomerpartikel beschränkt.

Im Unterschied dazu bilden sich durch das vorteilhafte erfindungsgemäße Verfahren gerade keine isolierten, in sich vernetzten Elastomerpartikel aus, sondern es liegt ein interpenetrierendes Gemenge aus den Ketten von Vinylacetat-haltigem Polymer sowie den schwefelvernetzten Elastomerketten vor. Die polymeren Komponenten liegen als chemisch weitmaschig vernetzte Raumnetzmoleküle vor, wobei die Vernetzungen ohne Zersetzung des Materials nicht gelöst werden können. Die Polymermischung ist frei von darin dispergierten, vulkanisierten Elastomer-Partikeln, insbesondere frei von Elastomer-Partikeln oder Kautschuk-Domänen mit einem mittleren (Teilchen-) Durchmesser von mehr als 0,5 µm, insbesondere von mehr als 0,1 µm, vorzugsweise mehr als 0,01 µm.

Zur Verbesserung der Anforderungen hinsichtlich Rauchdichte und Toxizität ist es vorteilhaft, wenn sämtliche polymere Komponenten, insbesondere die gesamte Zusammensetzung, halogenfrei sind/ist.

Gemäß einer vorteilhaften Ausführungsvariante ist vorgesehen, dass das Vinylacetat-haltige Polymer ein Homopolymer, Copolymer oder Terpolymer des Vinylacetats ist und insbesondere ausgewählt ist aus der Gruppe von Polyvinylacetat (PVAc) oder Ethylenvinylacetat (EVA).

Eine besonders geringe Rauchgasdichte bei gleichzeitig guten chemischen Eigenschaften wird erhalten, wenn das Vinylacetat-haltige Polymer einen Vinylacetat-Anteil von 40 bis 75 Gew.-%, aufweist (LP Testing instruction No. 015, Lanxess).

Ethylenvinylacetat wird meist im Kabelbereich eingesetzt. Die polare Vinylacetatgruppe verbessert die Flammwidrigkeit und gleichzeitig die Ölbeständigkeit. Die Rauchgasdichte ist gering und das Rauchgas weist keine Toxizität auf. Ethylenvinylacetat weist gleichzeitig eine hervorragende Witterungs-, UV-, Ozon - und Hitzebeständigkeit auf.

In diesem Zusammenhang ist es vorteilhaft, wenn das Vinylacetat-haltige Polymer eine Schmelztemperatur bzw. einen Beginn des Schmelzbereichs von weniger als 150 °C, vorzugsweise weniger als 100 °C, aufweist sowie gegebenenfalls eine bei typischen Kautschukverarbeitungstemperaturen geringe Viskosität. Auf diese Weise lässt sich eine gute Mischung erzielen und gleichzeitig die Vulkanisation vollständig vermeiden.

Das ungesättigte Elastomer ist vorteilhafterweise ein Homopolymer, Copolymer oder ein Terpolymer aus bzw. mit Dien-Monomereinheiten, insbesondere ein Terpolymer bestehend aus Ethylen, Propylen und einem dienhaltigen Termonomer, vorzugsweise mit einem Termonomer-Anteil von mindestens 2 bis 12 Gew.-% bezogen auf das Terpolymer (gemäß ASTM D 6047). Auf diese Weise werden die für die Schwefelvernetzung notwendigen Doppelbindungen bereitgestellt und die dynamisch-elastischen Eigenschaften erhalten.

In diesem Zusammenhang ist es besonders vorteilhaft, wenn das ungesättigte Elastomer ein Kautschuk mit einer ungesättigten Seitengruppe, insbesondere ein Ethylen-Propylen-Dien-Kautschuk (EPDM) ist. Ethylen-Propylen-Dien-Monomer-Kautschuke (EPDM) weisen im Brandfall große Vorteile bezüglich ihrer geringen Rauchgasdichte und Toxizität auf, sind selbst aber nicht brandbeständig. EPDM-Kautschuke sind aber mit Füllstoffen und Weichmachern hoch füllbar und gestatten es so, einen hohen Anteil an Brandschutzmitteln in fester und flüssiger Form aufzunehmen. EPDM-Kautschuke können außerdem in einem breiten Bereich der Härte und der mechanischen Kennwerte eingestellt werden. Weiters bieten EPDM-Kautschuke Vorteile hinsichtlich der Witterungs-, UV-, Ozon- und Hitzebeständigkeit und vermögen als Schutzschicht die Alterung der zu schützenden, dynamisch belasteten Bauteile, z. B. aus Naturkautschuk, zu minimieren.

Vorzugsweise sind darin nicht-konjugierte Dien-Monomereinheiten enthalten, ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-iso-Propyliden-2-norbornen, 5-vinyl-norbornen.

Besonders vorteilhaft ist es dabei, wenn der Ethylen-Propylen-Dien-Monomer-Kautschuk (EPDM) ein Terpolymer aus Ethylen, Propylen und 5-Ethyliden-2-norbornen (ENB) oder Dicyclopentadien (DCPD) ist, vorzugsweise mit einem Termonomer-Anteil von mindestens 2 bis 12 Gew.-% bezogen auf das Terpolymer (gemäß ASTM D 6047).

Aufgrund des vergleichsweise geringen Doppelbindungsgehaltes von EPDM gegenüber anderen Dienkautschuken ist zur Erzielung einer wirtschaftlich sinnvollen Vulkanisationsgeschwindigkeit eine höhere Beschleunigermenge einzusetzen. Die Löslichkeit von EPDM für Schwefel und die meist polaren Beschleuniger bzw. Beschleunigerreste ist gering. Deshalb wird hierfür meist eine Kombination mehrerer Beschleuniger verwendet, um ein Ausblühen zu vermeiden.

Wird zusätzlich ein Schutz gegenüber Ölen und Fetten gefordert, ist es auch möglich, dass das ungesättigte Elastomer ein Kautschuk der R-Gruppe mit ungesättigter Hauptkette, insbesondere ein teilhydrierter Acrylnitrilbutadien-Kautschuk (HNBR) ist.

Der HNBR wird durch Teilhydrierung eines NBR hergestellt. Durch den geringen Anteil an Doppelbindungen bietet dieser Kautschuk als Basis für eine Schutzschichtmischung den Vorteil, gute Werte hinsichtlich der brandschutztechnischen Eigenschaften, z.B. Rauchgasdichte, zu erzielen und gleichzeitig hervorragende mechanisch-dynamische Kennwerte zu generieren. Bezüglich der Ausrüstung mit Flammschutzmitteln gelten die gleichen Bedingungen wie für EPDM.

Für die Ausbildung eines vorteilhaften Schwefelvernetzungssystems ist es vorteilhaft, wenn das ungesättigte, teilhydrierte Elastomer einen Hydrierungsgrad von 94 bis 97 % aufweist und damit vor der Vernetzung einen Restdoppelbindungsanteil von 3 bis 6 % in der Hauptkette, bezogen auf den Ausgangsdoppelbindungsgehalt in der Hauptkette besitzt (ASTM D 5670-95, siehe auch D. Brück, Kautschuk und Gummi, Kunststoffe 42(1989) 2/3).

Die Vernetzung mit Schwefel und Schwefelspendern setzt die Anwesenheit von Doppelbindungen entweder in der Hauptkette oder in einer Seitenkette voraus. Über das Mengenverhältnis von Schwefel, Schwefelspendern und Beschleunigern und die Art der Beschleuniger wird die Länge der Schwefelnetzbrücken und die Netzwerkdichte bestimmt.

Häufig eingesetzte Beschleuniger sind z.B. Sulfenamide, z.B. N-Cyclohexyl-2-benzothiazylsulfenamid (CBS), Thiazole, z.B. 2-Mercaptobenzothiazol (MBT), Dithiocarbamate, z.B. Zinkdibenzyldithiocarbamat (ZBEC), Guanidine, z.B. Diphenylguanidin (DPG) oder Thiophosphate.

Als Schwefelspender kommen z.B. Thiurame, Caprolactamdisulfid oder Phosphorylpolysulfid zum Einsatz.

Die Vernetzungsdichte bzw. Netzwerkdichte bzw. Gesamtnetzbogendichte ist mitbestimmend für die elastischen Eigenschaften der Schutzschichtmischung. Sie kann durch Gleichgewichtsquellung nach der Flory-Rehner-Gleichung ermittelt werden (P.J. Flory und J. Rehner, J. Chem. Phys., 11 (1943)521).

Die Vernetzungsbrücken setzen sich aus Anteilen mono- di- und polysulfidischer Netzbögen bzw. Schwefelbrücken zusammen. Eine genaue Bestimmung der Länge der Schwefelbrücken lässt sich mittels der Thiol-Amin-Methode durchführen. Diese Methode lässt eine Aussage zur Längenverteilung der Schwefelbrücken zu (B. Savile und A. A. Watson, Rubber Chem. Technol. 40 (1967) 100 und D.S. Campbell, Rubber Chem. Technol. 43 (1970) 210).

Zur Ausbildung eines, die elastischen und dynamischen Eigenschaften positiv beeinflussenden Vernetzungssystems kann mit Vorteil vorgesehen sein, dass der am Aufbau der Schwefelbrücken beteiligte Schwefel in einer Menge von 0,3 bis 2 phr (parts per hundred rubber), bezogen auf die Gesamtmenge der polymeren Komponenten, enthalten ist.

Insgesamt ist es vorteilhaft, wenn Schwefel in einer Menge von mindestens 0,5 phr bezogen auf die Gesamtmenge der polymeren Komponenten enthalten ist.

Eine vorteilhafte Zusammensetzung ist dadurch gekennzeichnet, dass das unvernetzte Vinylacetat-haltige Polymer in einer Menge von 5 bis 15 Gew.-%, insbesondere 7 bis 12 Gew.-%, und das ungesättigte Elastomer in einer Menge von 20 bis 40 Gew.-%, insbesondere 20 bis 30 Gew.-%, vorzugsweise 21 bis 29 Gew.-%, jeweils bezogen auf das Gesamtgewicht der Zusammensetzung, enthalten ist.

In diesem Zusammenhang ist es besonders vorteilhaft, wenn die Polymermischung nur aus unvernetztem Ethylenvinylacetat (EVA) und schwefelvernetztem Ethylen-Propylen-Dien-Kautschuk (EPDM) als den beiden einzigen polymeren Komponenten besteht, insbesondere in einem Verhältnis von 40 bis 20 Gew.-% EVA zu 60 bis 80 Gew.-% EPDM, vorzugsweise etwa 20 bis 30 Gew.-% EVA zu 70 bis 80 Gew.-% EPDM, vorzugsweise etwa 21 bis 29 Gew.-% EVA zu 71 bis 79 Gew.-% EPDM insbesondere etwa 25 Gew.-% EVA zu 75 Gew.-% EPDM, wobei sich die Angaben in Gew.-% jeweils auf das Verhältnis der reinen polymeren Komponenten zueinander bzw. auf die Menge der Polymere EVA+EPDM (=100 Gew.-%) ohne Füllstoffe, Additive, Flammschutzmittel beziehen. Auf diese Weise wird eine innige Mischung der polymeren Bestandteile und ein nahezu einphasiges System erhalten.

Gemäß einer bevorzugten Weiterentwicklung ist es auch möglich, dass zumindest ein Polyolefin, insbesondere Polyethylen, vorzugsweise LLDPE, oder Polypropylen, als weitere polymere Komponenten enthalten sind. Auf diese Weise können die Eigenschaften der Polymermischung in die gewünschte Richtung beeinflusst werden.

Eine besonders vorteilhafte Zusammensetzung ergibt sich wie folgt:
- Vinylacetat-haltiges Polymer 5-15 Gew.-%
- ungesättigtes Elastomer 20-40 Gew.-%
- Flammschutzmittel 50 70 Gew.-%
- Rest Hilfsstoffe, Additive etc.

In diesem Zusammenhang ist es besonders vorteilhaft, wenn das Vinylacetat-haltiges Polymer Ethylenvinylacetat (EVA) und das ungesättigte Elastomer ein Ethylen-Propylen-Dien-Kautschuk (EPDM) ist.

Um eine gute Flammschutzwirkung hervorzurufen, kann vorgesehen sein, dass das/die Flammschutzmittel in einer Menge von 50 bis 80 Gew.-%, vorzugsweise 51 bis 79 Gew.-%, vorzugsweise 60 bis 70 Gew.%, vorzugsweise 61 bis 69 Gew.-%, bezogen auf die gesamte Zusammensetzung, enthalten ist/sind. Der Anteil an Flammschutzmittel ist sehr hoch, um die gewünschten Brandschutznormen verlässlich zu erfüllen. Dennoch werden die mechanischen Parameter, vor allem die dynamischen und elastischen Eigenschaften der Zusammensetzung nicht über Gebühr beeinflusst und bleiben überraschenderweise erhalten. Auf diese Weise ist auch gewährleistet, dass die Zusammensetzung als Beschichtung auf einen Grundkörper aufgebracht werden kann und dass die vorteilhaften mechanischen Eigenschaften - vor allem die dynamischen und elastischen Eigenschaften - des Grundkörpers erhalten bleiben und dieser durch die Beschichtung gleichzeitig flamm- und brandgeschützt ist.

Zur Erreichung guter Brandschutzeigenschaften unter möglichst geringer Beeinflussung der Materialeigenschaften hat es sich als vorteilhaft bewährt, dass als Flammschutzmittel Magnesiumhydroxid (MDH), Aluminiumhydroxid (ATH), Antimotrioxid, Nanoclays und/oder Zinkborat, vorzugsweise eine synergistisch wirkende Mischung aus zwei oder mehreren davon, zugesetzt sind. Insbesondere ist/sind das/die Flammschutzmittel dabei fest und pulverförmig oder kristallin. Die Flammschutzmittel müssen allerdings, um ihre Wirksamkeit zu erzielen, in großen Mengen beigefügt werden und beeinflussen deshalb die mechanischen Eigenschaften, z.B. Zugfestigkeit, Reißdehnung, Weiterreißwiderstand, Elastizität, derartig ausgerüsteter Mischungen sehr negativ.

Zur Erzielung weiterer gewünschter bzw. geforderter Eigenschaften der flammhemmenden bzw. brandschutzhemmenden Beschichtung wird darüber hinaus vorgeschlagen, dass der Beschichtung weitere Zusätze, wie beispielsweise Füll- bzw. Farbstoffe, wie insbesondere Russ, Verarbeitungshilfsmittel, Alterungsschutzmittel oder dgl. zugesetzt sind. Bei der Verwendung von Weichmachern finden Phosphorsäureester ihre Anwendung, die aufgrund ihrer Polarität nur in beschränktem Umfang mit unpolaren Kautschuken verträglich sind.

Die erfindungsgemäße Zusammensetzung weist vorteilhafterweise die folgenden Kennwerte auf, nämlich eine Härte von 50 bis 75, vorzugsweise 55 bis 65, Shore A (DIN ISO 7619-1) und/oder eine Reißdehnung von 200 bis 600%, vorzugsweise von 350 bis 600% (DIN 53504) und/oder einen Weiterreißwiderstand von > 7 N/mm, vorzugsweise > 9 N/mm (DIN ISO 34-1 B). Daraus ist ersichtlich, dass trotz des hohen Anteiles an Flammschutzmitteln die für die dynamisch-elastischen Eigenschaften wesentlichen Kennwerte erhalten bleiben und erfüllt werden.

Die Erfindung bezieht sich weiters auf einen flammgeschützten Artikel. Dieser Artikel kann entweder ausschließlich aus der erfindungsgemäßen Zusammensetzung bestehen, beispielsweise als Formteil. Alternativ kann ein solcher Artikel auch nur teilweise diese Zusammensetzung umfassen, beispielsweise in Form einer Beschichtung auf einem Grundkörper, beispielsweise auf einem Gewebe.

Ebenfalls betrifft die Erfindung ein elastisches Verbundelement, geeignet zur Schwingungs- und Vibrationsdämpfung und Federung, mit einem Grundkörper, der zumindest teilweise oder abschnittsweise, an seiner äußeren Oberfläche, gegebenenfalls an seiner gesamten äußeren Oberfläche, mit zumindest einer Beschichtung aus der erfindungsgemäßen Zusammensetzung versehen ist.

Vorteilhafterweise ist vorgesehen, dass der Grundkörper zum überwiegenden Teil aus Gummi bzw. Kautschuk, beispielsweise aus Polybutadienkautschuk, Styrolbutadienkautschuk, Acrylilnitrilkautschuk, Ethylen-Propylen-Dien-Kautschuk, Moosgummi oder Mischungen hievon, vorzugsweise aus Naturkautschuk, gebildet ist. Die geforderten elastischen bzw. dynamischen Eigenschaften des Grundkörpers des elastischen Elements werden darüber hinaus bevorzugt dadurch verstärkt bzw. unterstützt, dass in an sich bekannter Weise dem Grundkörper zusätzlich Füll- bzw. Verstärkerstoffe, Weichmacher, Vulkanisationsbeschleuniger, Vernetzungsmittel, Alterungsschutzmittel oder dgl. zugesetzt sind.

Gemäß einer bevorzugten Weiterentwicklung ist vorgesehen, dass die Beschichtung fest und untrennbar mit dem Grundkörper verbunden ist, wobei die Beschichtung auf den Grundkörper vorzugsweise durch Konfektion, Extrusion, Pressen, Spritzen und nachfolgende Co-Extrusion aufgebracht ist. Durch die genannten Verfahren lässt sich in einfacher und zuverlässiger Weise das aus dem Grundkörper und der flammhemmenden bzw. brandhemmenden Beschichtung bestehende elastische Verbundelement unter Herstellung eines entsprechend sicheren Verbunds zwischen dem Grundkörper und der Beschichtung bereitstellen. Neben einer Herstellung des Verbundelements in einem einstufigen Verfahren können, insbesondere in Anpassung an die sowohl für den Grundkörper als auch die Beschichtung gewählten Materialien, mehrstufige Verfahren gewählt werden. Unter Berücksichtigung der eingesetzten Materialien wird darüber hinaus erfindungsgemäß bevorzugt vorgeschlagen, dass die Herstellung bei Temperaturen unter 200 °C, insbesondere zwischen 130 °C und 170 °C durchgeführt wird.

Es hat sich als ausreichend erwiesen, wenn die Beschichtung eine vergleichsweise geringe Dicke von weniger als 10 mm, insbesondere 1 bis 5 mm, aufweist. Dennoch werden die flammschutzhemmenden Eigenschaften bei einer möglichst geringen, gegebenenfalls auftretenden Beeinträchtigung der elastischen Eigenschaften des Grundkörpers verlässlich erreicht.

Ein vorteilhaftes Verbundelement mit vernachlässigbar geringer Beeinträchtigung der elastischen Eigenschaften des Grundkörpers ist dadurch gekennzeichnet, dass die Beschichtung einen Gewichtsanteil von 1 bis 20 Gew.-%, insbesondere 2 bis 16 Gew.-%, des elastischen Verbundelements aufweist.

Erfindungsgemäß kann weiters vorgesehen sein, dass der Grundkörper mit einer Armierung, beispielsweise Fasern, insbesondere Glasfasern, Kunststofffasern, CFK-Fasern, GFK-Fasern, einem Stoff bzw. Gewebe oder dgl. versehen ist.

Die Erfindung betrifft weiters die vorteilhafte Verwendung eines elastischen Verbundelements gemäß einem der vorangehenden Ansprüche als Federelement, Dämpfungselement, Dichtung, Schlauch, Matte, Formteil, Schutzbekleidung etc. oder als Bestandteil hiervon. Der Artikel kann vorteilhafterweise auch als, insbesondere als Endlosprofil ausgebildetes, Elastomerprofil, insbesondere für Fenster bzw. als Dichtung zwischen Rahmen und Glas, eingesetzt werden.

### Beispiele für die erfindungsgemäße Zusammensetzung:

### Beispielhafte Rezepturen:

| Beispiel A | Gew.-% |
|---|---|
| Ethylen-Vinylacetat | 12 |
| Ethylen-Propylen-Dien-Kautschuk | 30 |
| Flammschutzmittel | 55 |
| Beschleuniger | 1,2 |
| Vernetzer (Schwefel) | 0,8 |
| Aktivator und Verarbeitungshilfsmittel | 1 |

Die in Beispiel A beschriebene brandhemmende bzw. flammhemmende Beschichtung zeigt eine grundsätzliche qualitative und quantitative Rezeptur für eine vorteilhafte Zusammensetzung. Diese zeichnet sich durch gute Brandeigenschaften aus, wobei insbesondere eine geringe Rauchgasdichte in einem Brandfall erzielbar ist. Eine derartige Beschichtung gelangt vor allem bei elastischen Elementen bzw. Bauteilen zum Einsatz, in welchen beispielsweise Personen im Brandfall entstehenden Gasen oder einer Rauchentwicklung ausgesetzt sind.

Die folgenden Beispiele 1 bis 5 zeigen detaillierte exemplarische Rezepturen:

| Handelsname | Beschreibung | Bsp 1 | Bsp 2 | Bsp 3 | Bsp 4 | Bsp 5 |
|---|---|---|---|---|---|---|
| Vistalon 6505 | EPDM, ENB: 9,2% | 23 | 23 | 20 | 23 | 23 |
| Levapren 600 | EVA mit 60 Gew-% VAC | 7 | 7 | 10 | 7 | 7 |
| Magnifin H10 | Mg(OH)₂d₅₀= 0,9 µm (Laserbeugung) | 50 | 50 | 50 | | |
| MAGNIFIN® H-10A | Mg(OH)₂, ₛᵢₗₐₙᵢₛᵢₑᵣₜ, d₅₀= 0,9 µm (Laserbeugung) | | | | 50 | |
| APYRAL 40CD | Al (OH)₃, d₅₀= 1,3 µm (Laserbeugung) | | | | | 50 |
| Firebrake ZB | Zinkborat | 9 | 9 | 9 | 9 | 9 |
| Ruß N 550 | Ruß | 1 | 1 | 1 | 1 | 1 |
| Disflamol TOF | Tris-(2-ethylhexyl)-phosphat (TOF) | 5 | 5 | 5 | 5 | 5 |
| ZnO | Zinkoxid, (BET 5m²/g) | 2 | 2 | 1,7 | 2 | 2 |
| Stearinsäure | Octadekansäure | 0,5 | 0,5 | 0,5 | 0,5 | 0,5 |
| TMQ | 2,2,4-Trimethyl-1,2-dihydrochinolin | 0,3 | 0,3 | 0,3 | 0,3 | 0,3 |
| ZMTI | Zinc 2-mercaptotoluimidazol | 0,2 | 0,2 | 0,2 | 0,2 | 0,2 |
| Mahlschwefel | Schwefel | 0,5 | 0,45 | 0,4 | 0,5 | 0,5 |
| Deovulc BG 187 | Beschleunigergemisch | 1,5 | | 1,2 | 1,5 | 1,5 |
| CBS | N-Cyclohexyl-2-benzothiazylsulfenamid | | 0,65 | | | |
| ZBEC | Zinkdibenzyldithiocarbamat | | 0,5 | | | |
| MBTS | 2,2'-Dibenzothiazyldisulfid | | 0,2 | | | |
| MBT | 2-Mercaptobenzothiazol | | 0,2 | | | |

alle Angaben in Gew.- % bezogen auf das Gesamtgewicht der Mischung

Die Beispielrezeptur 4 mit silanisiertem Mg-Hydroxid weist wegen der Silanisierung verbesserte Festigkeitseigenschaften gegenüber der Beispielrezeptur 1 auf. Beispielrezeptur 5 weist gegenüber Beispielrezeptur 1 ein verändertes Flammschutzverhalten dahingehend auf, dass die Wasserabspaltung bei geringeren Temperaturen erfolgt.

Alle Beispielrezepturen 1 bis 5 und daraus hergestellte Testplatten können allein für sich die Forderungen der Norm CEN TS 45545-2 erfüllen und als Deckschicht in einem Dickenbereich von 2 mm bis 10 mm, bevorzugt 4 bis 6 mm, vorzugsweise dynamisch belastete Bauteile aber auch statisch belastete Artikel, basierend z.B. auf NR, SBR brandschutztechnisch schützen. Durch Covulkanisation und die daraus resultierende gute Anbindung an das Kernmaterial wird ein sicherer Schutz während der gesamten Lebensdauer gewährleistet, ohne die dynamische Charakteristik, z.B. Federkennlinie des gesamten Formartikels zu beeinflussen.

Auch Verbundkörper 1 beschichtet mit einer der aus den Beispielrezepturen 1 bis 5 erstellten Zusammensetzungen erfüllen alle die Brandschutznorm CEN TS 45545-2.

### Herstellung einer erfindungsgemäßen Zusammensetzung aus der Beispielrezeptur 1:

Die Herstellung der beispielhaften Beispielrezeptur 1 erfolgt alternativ auf einem Walzwerk oder in einem Innenmischer:
Arbeitet man auf Walzwerken, erfolgt der Ablauf in folgender Reihenfolge:
   EPDM und EVA werden miteinander gemischt bis sich ein glattes Walzfell gebildet hat. Dabei wird ohne Walzenkühlung gearbeitet. Um die Homogenität sicherzustellen, wird vor Zugabe der Zuschlagstoffe das Mischungsfell abwechselnd dreimal von links und rechts bis zu etwa 3/4 der Walzenbreite im Winkel von etwa 45° eingeschnitten und die so abgenommene Mischung wieder auf der anderen Seite aufgegeben, im folgenden 3x links und rechts Einschneiden genannt. Vor Beginn des Einmischprozesses der anderen Mischungsbestandteile wird die Wasserkühlung der Walzen eingeschaltet. Die Zugabe der festen und flüssigen Zuschlagstoffe erfolgt fortlaufend in kleinen Mengen und permanenter Spaltverstellung. Hat der Kautschuk alle Stoffe aufgenommen, wird wiederum durch dreimaliges Einschneiden links und rechts homogenisiert. Das Walzfell wird von der Walze genommen und bei Raumtemperatur 10 Minuten zwischengelagert, um eine Kühlung der Mischung und der Walzen zu erreichen. Die Zugabe der Beschleuniger erfolgt gemeinsam mit dem Schwefel. Hat die Mischung den Beschleuniger und Schwefel aufgenommen, wird die Mischung wieder dreimal links und rechts eingeschnitten. Anschließend wird die Mischung komplett von der Walze genommen und sechs Mal gestürzt. Abwechselnd wird das Walzfell in und quer zur Walzrichtung aufgegeben. Danach erfolgt das Abnehmen des Walzfelles in gewünschter Felldicke.
Arbeitet man mit einem Innenmischer, erfolgt der Ablauf in folgender Reihenfolge:
   Die Mischkammer wird vor dem Beginn des Mischvorganges auf 50°C +/- 5°C temperiert. Zuerst werden EPDM und EVA eingefüllt und 120 Sekunden bei gesenktem Stempel geknetet. Danach erfolgt die Zugabe der festen und flüssigen Zuschlagstoffe. Der Stempel wird gesenkt und es wird wiederum 120 Sekunden geknetet. Anschließend wird der Stempel gereinigt und die Mischung nochmals maximal 60 Sekunden oder bis zum Erreichen einer Massetemperatur von 100°C in der Mischkammer gemischt und anschließend ausgeworfen. Die Mischungskühlung und Homogenisierung erfolgt am nachgeschalteten Walzwerk mittels Stockblender. Die Kühlwassertemperatur am Einlauf beträgt max. 30 °C. Hat die Mischung eine Temperatur von etwa 80°C +/- 5°C erreicht, wird der Beschleuniger zugegeben. Nach nochmaligem Homogenisieren mittels Stockblender (5 Zyklen) wird das Mischungsfell von der Walze genommen und auf Transportwagen bis zur Weiterverarbeitung gelagert.

Die Beispielrezeptur 1 wurde in einem Innenmischer des Typs LH 50 A (Baujahr 1961) nach obigem Verfahren mit einer Drehzahl der tangierenden Schaufeln von 30 U/min gefertigt. Nach dem Auswerfen der Mischung bei 100°C wurde die Mischung auf einem Walzwerk (Berstorff 1500 mm), wie oben beschrieben, gekühlt und die Beschleuniger eingemischt. Es wurden Mischungsfelle mit einer Dicke von 4 mm von der Walze genommen und auf einem Transportwagen bis zur Weiterverarbeitung gelagert.

Die Vulkanisation der Zusammensetzung 1 erfolgte in einer elektrischen Presse bei 155 °C, 15 min und einem Druck von 200 bar, jedenfalls aber nach erfolgter Formgebung und unter Vermeidung jeglicher Scherbeanspruchung.

### Mechanische Kennwerte der aus Beispielrezeptur 1 so erhaltenen Zusammensetzung:

| | |
|---|---|
| Shore A (DIN ISO 7619-1): | 67 |
| Reißdehnung (DIN 53504): | 350 % |
| Weiterreißwiderstand (DIN ISO 34-1 B): | 10 N/mm |

Insbesondere der hohe Wert der Reißdehnung hat den Vorteil, dass die Deformationen des zu schützenden Bauteils durch die Deckschicht dauerhaft ausgehalten würden. Zudem werden Druckverformungsreste von 40% bei 70 °C (DIN ISO 815-B) erreicht.

### Brandschutzwerte der aus der Beispielrezeptur 1 so erhaltenen Zusammensetzung:

Die Beurteilung der brandtechnischen Eigenschaften erfolgte gemäß CEN TS 45545-2, wobei folgende Werte erzielt wurden:

| | |
|---|---|
| Rauchgasdichte (ISO 5669-2): | Ds,max = 220 |
| Rauchgastoxizität (ISO 5669-2): | CIT (nach 4 min): 0,051/CIT (nach 8 min): 0,074 |
| Wärmefreisetzungsrate (ISO 5660-1) : | MARHE = 81 kW/m² |

### Schwefelbrückenanalyse der aus der Beispielrezeptur 1 so erhaltenen Zusammensetzung:

Es wurde mit der Beispielrezeptur 1 eine Netzbogendichtebestimmung mittels Gleichgewichtsquellung durchgeführt. Als Probe wurde eine Prüfplatte, 2 mm verwendet, die Vulkanisation wurde bei 155°C, 15 min, 200bar n einer elektrischen Presse durchgeführt. Die Prüfkörper wurden durch Ausstanzen aus der Vulkanisatplatte hergestellt und hatten einen Durchmesser von ca. 8 mm.

Die Methode erfasst neben der Netzbogendichte [mol/cm³], die durch Schwefelbrücken gebildet werden, auch die Netzwerkdichte des Füllstoffnetzwerkes (siehe: B. Saville, A.A. Watson, Rubber Chem. Technol. 40(1967) 100). Es wurde dabei sowohl die Gesamtnetzbogendichte als auch die Verteilung der mono-, di- und polysulfidischen Netzknoten untersucht.

Die Gesamtnetzbogendichte wurde mittels Quellungsmessungen als Dreifachbestimmung mit folgenden Parametern durchgeführt: Quellmittel: 20 ml Toluol, Einwaage Vulkanisat (bezogen auf Polymer und Füllstoffe): ca. 0,05 g - 0,2 g; Raumtemperatur. Die Versuchsdauer wurde durch das Erreichen der Gleichgewichtseinstellung des Quellvorganges bestimmt, der gravimetrisch geprüft wird. Es wurde jeweils eine Dreifachbestimmung durchgeführt. Die Auswertung und Berechnung der Netzbogendichte erfolgte gemäß Flory-Rehner, wobei ein konzentrationsunabhängiger Flory-Huggins-Parameter (c) von 0,3 eingesetzt wurde. Zur Bestimmung der mono- und disulfidischen Netzbogendichte S1 und S2 wurde das Vulkanisat einer Abbaureaktion mit iso-Propanthiol in einem Piperidin/Heptan-Gemisch bei Raumtemperatur über zwei Stunden unterworfen. Die Reaktion erfolgte unter Schutzgas (N₂). Nach der Abbaureaktion wurde das Probenmaterial mit Petrolether gespült, getrocknet und der Quellungsmessung ausgesetzt. Das Resultat war die Netzbogendichte, die durch S1- und S2-Brücken bestimmt wird. Durch Differenzbildung mit dem Ergebnis der Gesamtnetzbogendichte ergibt sich der Anteil an polysulfidischen Sx-Brücken.

Zur Bestimmung der monosulfidischen Netzbogendichte S1 wurde das Vulkanisat einer Abbaureaktion mit Hexanthiol in Piperidin für zwei Tage unter Vakuum unterzogen. Nach Spülen mit Petrolether wurde wie oben die verbleibende Netzbogendichte bestimmt, welche nur durch S1 gegeben ist. Durch Differenzbildung zu den Ergebnissen der vorhergehenden Messungen ergibt sich der Anteil S2 und Sx.

Der relative Messfehler der Methode lag im Mittel bei ca. ± 5 % je Netzknotentyp bei einer mittleren Bestimmungsgrenze für die Netzbogendichte von ∼ 1,5*10⁻⁵ mol/cm³.

| | |
|---|---|
| Gesamtnetzbogendichte: | 2,2 +/- 0,0 x 10⁻⁴ mol/cm³ |
| S1 | 0,9 +/- 0,0 x 10⁻⁴ mol/cm³ |
| S2 | 0,3+/-0,1 x 10⁻⁴ mol/cm³ |
| Sx | 1,0 +/- 0,1 x 10⁻⁴ mol/cm³ |

Die so erhaltene Zusammensetzung kann somit einer Formgebung unterzogen und danach vulkanisiert werden, und in dieser Form ohne weiteren Bearbeitungsschritt als flammgeschützter Artikel, beispielsweise als Profil, direkt verwendet werden. Alternativ kann die so erhaltene Zusammensetzung aber auch zu einem Verbundelement weiterverarbeitet werden und erst dann zum fertigen Endprodukt vulkanisiert werden.

### Beispiele für das erfindungsgemäße Verbundelement 1:

Das erfindungsgemäße Verbundelement 1 wird nachfolgend anhand von in der Zeichnung schematisch dargestellten exemplarisch und nicht einschränkend zu verstehenden Ausführungsbeispielen näher beschrieben.
Fig. 1 zeigt einen schematischen Schnitt durch eine Verbundfeder als eine erste Ausführungsform eines erfindungsgemäßen elastischen Verbundelements;
Fig. 2 zeigt in einer zu Fig. 1 ähnlichen Darstellung einen schematischen Schnitt durch ein von einem Puffer bzw. einer Buchse gebildetes Verbundelement;
Fig. 3 zeigt einen schematischen Schnitt durch ein von einem Faltenbalg gebildetes Verbundelement;
Fig. 4 zeigt einen schematischen Schnitt durch einen Rollbalg einer Luftfeder als Verbundelement;
Fig. 5 zeigt einen schematischen Schnitt durch ein Flachlager einer Sekundärfeder als Verbundelement;
Fig. 6 zeigt einen schematischen Schnitt durch einen Puffer als Verbundelement;
Fig. 7 zeigt einen schematischen Schnitt durch eine Buchse bzw. Führungsbuchse als Verbundelement;
Fig. 8 zeigt ebenfalls einen schematischen Schnitt durch ein Lager bzw. eine Lagerbuchse als Verbundelement;
Fig. 9 und 10 zeigen jeweils einen schematischen Schnitt durch unterschiedliche Ausführungsformen eines Puffers bzw. eines Dichtungselements als Verbundelement; Fig. 11 zeigt einen schematischen Schnitt durch eine Tiefzugfeder bzw. Zusatzfeder als Verbundelement;
Fig. 12 zeigt einen schematischen Schnitt durch eine Schichtfeder bzw. Zusatzfeder als Verbundelement;
Fig. 13 und 14 zeigen jeweils einen schematischen Schnitt durch unterschiedliche Ausführungsformen einer Hohlfeder als Verbundelement;
Fig. 15 zeigt einen schematischen Schnitt durch einen Puffer bzw. eine Zusatzfeder als Verbundelement;
Fig. 16 zeigt einen schematischen Teilschnitt durch einen Schlauch als Verbundelement

In den Zeichnungen sind unterschiedlichste Ausführungsformen von elastischen Verbundelementen 1 dargestellt, wobei jedes aus einem Grundkörper 2 besteht, welcher zum überwiegenden Teil aus Gummi bzw. Kautschuk gebildet ist, wobei das Verbundelement 1 dynamisch belastbar ist. Darüber hinaus weisen die in den Zeichnungen dargestellten Verbundelemente 1 jeweils wenigstens teilweise an ihrer äußeren Oberfläche 3 die erfindungsgemäße flammhemmende bzw. brandhemmende Beschichtung 4 auf, welche insbesondere an zum Äußeren der jeweiligen Verbundelement 1 gerichteten Teilbereichen angeordnet ist.

Beispiele für Materialzusammensetzungen für die unterschiedlichen Ausbildungen von Grundkörpern 2 werden nach einer Beschreibung der Figuren gegeben.

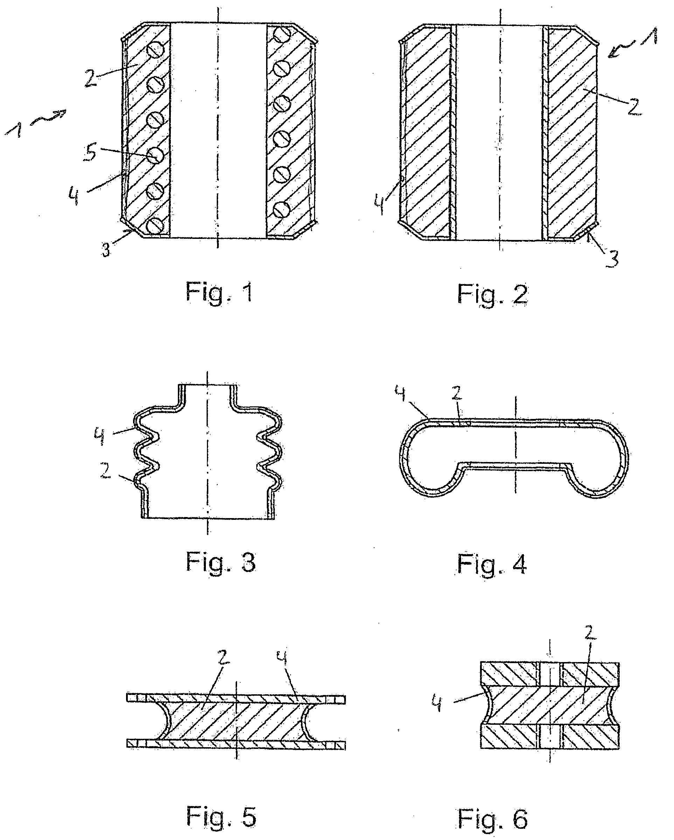

In Fig. 1 ist ein schematischer Schnitt durch eine Verbundfeder als Verbundelement 1 dargestellt, wobei in einem Grundkörper 2 ein metallisches Federelement 5 angeordnet ist. An exponierten Teilbereichen bzw. zur Außenseite liegenden Bereichen der Oberfläche 3 ist darüber hinaus eine flammhemmende bzw. brandhemmende Beschichtung 4 mit den erfindungsgemäßen Merkmalen vorgesehen.

Bei dem in Fig. 2 schematisch dargestellten Puffer bzw. der schematisch dargestellten Buchse als Verbundelement 1 ist ein Grundkörper 2, welcher wiederum aus einem elastischen Material, überwiegend aus Gummi bzw. Kautschuk gebildet ist, ebenfalls über Teilbereiche seiner Oberfläche 3 mit der Beschichtung 4 ausgebildet.

Bei dem in Fig. 3 dargestellten Balg bzw. Faltenbalg als Verbundelement 1 ist ersichtlich, dass im wesentlichen seine gesamte, zum Äußeren gewandte Oberfläche 3 mit der Beschichtung 4 versehen ist, wobei der Grundkörper des Balgs bzw. Faltenbalgs mit 2 bezeichnet ist.

In ähnlicher Weise ist bei der Darstellung gemäß Fig. 4 eines Rollbalgs einer Luftfeder ersichtlich, dass der Grundkörper 2 an seiner gesamten äußeren Oberfläche 3 mit der Beschichtung 4 versehen bzw. ausgebildet ist.

Bei dem in Fig. 5 schematisch dargestellten Flachlager als Verbundelement 1 ist ebenfalls ersichtlich, dass der Grundkörper 2 im wesentlichen an seiner gesamten Oberfläche mit der erfindungsgemäßen Beschichtung 4 ausgebildet ist.

Demgegenüber ist bei dem in Fig. 6 schematisch dargestellten Puffer bzw. Lager lediglich in Teilbereichen eine Beschichtung 4 an dem elastischen Grundkörper 2 vorgesehen bzw. ausgebildet.

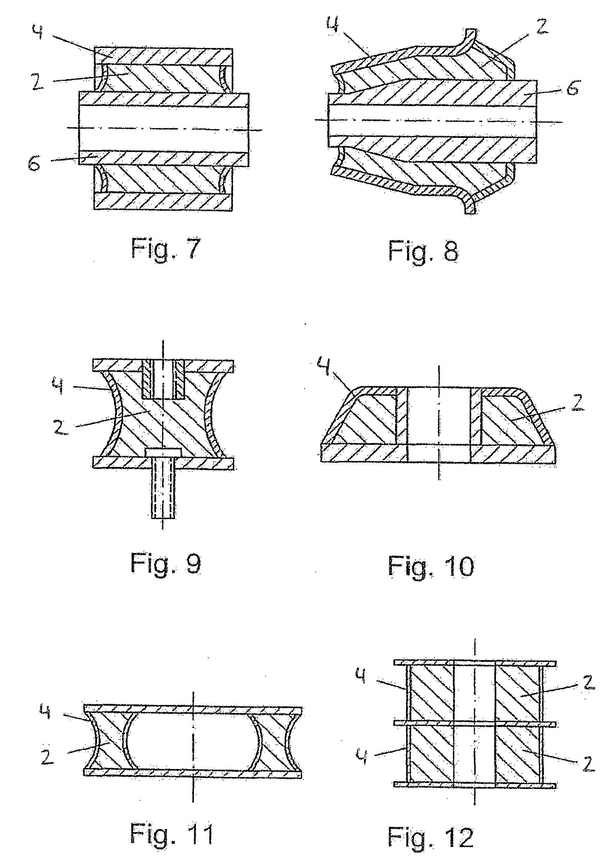

Bei der Buchse bzw. Führungsbuchse gemäß Fig. 7 ist wiederum ersichtlich, dass der Grundkörper 2 im wesentlichen an seiner gesamten, zum Äußeren gewandten Oberfläche 3 mit der Beschichtung 4 versehen ist, wobei zusätzlich ein Einsatzelement 6 vorgesehen ist.

In ähnlicher Weise ist bei der in Fig. 8 dargestellten Buchse der Grundkörper 2 an seiner zum Äußeren gewandten Oberfläche 3 mit einer Beschichtung 4 ausgebildet, wobei zusätzlich ein anderes Einsatzelement 6 vorgesehen ist.

In Fig. 9 und 10 sind unterschiedliche Ausführungsformen eines Puffers als Verbundelement 1 dargestellt, wobei sowohl bei der Ausbildung gemäß Fig. 9 der Grundkörper 2 mit einer Beschichtung 4 als auch bei der Ausbildung gemäß Fig. 10 der Grundkörper 2 mit einer Beschichtung 4 abgedeckt ist.

Bei der in Fig. 11 dargestellten Tiefzugfeder bzw. Zusatzfeder ist ein Grundkörper 2 wiederum wenigstens teilweise mit der Beschichtung 4 versehen.

Ähnliches gilt für die in Fig. 12 dargestellte Schichtfeder bzw. Zusatzfeder, wobei die Grundkörper 2 jeweils mit einer Beschichtung 4 versehen bzw. ausgebildet sind.

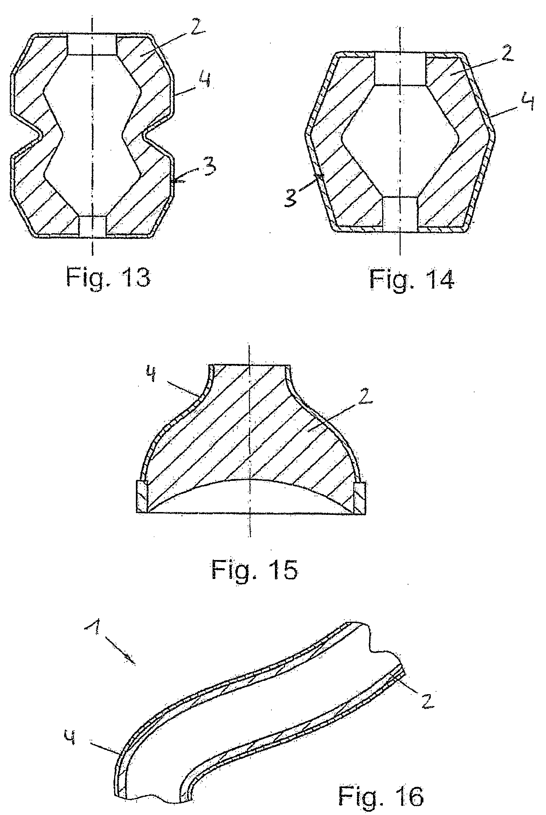

In den schematischen Darstellungen von Fig. 13 und 14 ist wiederum ersichtlich, dass unterschiedliche Ausbildungen eines Grundkörpers 2 jeweils mit der Beschichtung 4 im wesentlichen an der gesamten, zum Äußeren gerichteten Oberfläche 3 ausgebildet sind.

Ähnliches gilt für die in Fig. 15 schematisch dargestellte Primärfeder bzw. Zusatzfeder, wobei wiederum ein elastischer Grundkörper 2 mit einer Beschichtung 4 versehen ist.

Darüber hinaus ist in Fig. 16 schematisch ein Teilbereich eines elastischen Schlauchs als Verbundelement 1 dargestellt, wobei der elastische Grundkörper 2 zu Brandschutzzwecken mit der Beschichtung 4 versehen ist.

Neben den insbesondere in den Zeichnungen dargestellten Einsatz- bzw. Verwendungsgebieten eines elastischen Verbundelements 1 als Federelement, Dämpferelement bzw. Stoßdämpferelement, als Schlauch oder Lagerelement, kann ein derartiges aus einem Grundkörper 1 und der erfindunsggemäßen flammhemmenden bzw. brandhemmenden Beschichtung 4 bestehendes Element auch als Dichtung, als Formteil, als Matte oder in Form einer Schutzbekleidung, beispielsweise als Schutzhandschuh zum Einsatz gelangen.

### Beispiele für den Grundkörper 2 des Verbundelements 1:

Zur Ausbildung des Grundkörpers 2, der zum überwiegenden Teil aus Gummi bzw. Kautschuk gebildet sind, für unterschiedliche Einsatzzwecke werden nachfolgend einige Beispielrezepturen für hiefür verwendbare Materialeigenschaften gegeben, wobei, sofern nicht anders angegeben, sich die Prozentangaben jeweils auf Gew.-beziehen:

| | GK1 | GK2 | GK3 |
|---|---|---|---|
| | 50 ShA | 60 ShA | 70 ShA |
| Naturkautschuk | 57 | 51 | 48 |
| Füll- und Verstärkerstoff | 33 | 41 | 45 |
| Weichmacher | 1,5 | 0,7 | 0,2 |
| Beschleuniger und Vernetzer(Schwefel) | 2,5 | 2,2 | 2,0 |
| Alterungsschutz | 1 | 0,9 | 0,8 |
| Aktivator | 3 | 2,5 | 2,4 |
| Verarbeitungshilfsmittel | 2 | 1,7 | 1,6 |

| | GK4 | GK5 | GK6 |
|---|---|---|---|
| | 55 ShA | 60 ShA | 65 ShA |
| Acryl-Nitril-Butadienkautschuk | 58 | 53 | 48 |
| Ruß (Füll- und Verstärkerstoff) | 20 | 27 | 34 |
| Weichmacher | 15 | 12 | 10 |
| Beschleuniger + Vernetzer (Schwefelspender) | 2,50 | 2,50 | 2,50 |
| Aktivator | 2,50 | 2,50 | 2,50 |
| Verarbeitungshilfsmittel | 2 | 3 | 3 |
| | | | |

| | GK7 | | |
|---|---|---|---|
| | 65 ShA | | |
| Naturkautschuk | 25 | | |
| Styrol-Butadien-Kautschuk | 15 | | |
| Brombutyl | 10 | | |
| Füllstoffe | 42 | | |
| Beschleuniger | 1,0 | | |
| Vernetzer | 1,5 | | |
| Aktivatoren | 3,50 | | |
| Verarbeitungshilfsmittel | 2 | | |

In den obigen Tabellen sind unterschiedliche Beispiele GK1 bis GK7 für Grundkörper 2 mit unterschiedlicher Shore-Härte A angeführt.

Die Ausführungsbeispiele gemäß GK 1, 2 und 3 stellen hoch elastische Gummiwerkstoffe für einen Einsatz in einem dynamischen bzw. hoch-dynamischen Betrieb, beispielsweise für Primär- und Sekundärfedern zur Verfügung, wie diese beispielsweise in Fig. 1, Fig. 5, Fig. 6, Fig. 12 oder Fig. 15 gezeigt sind.

Die Grundkörper 2 der elastischen Elemente gemäß GK 4, 5 und 6 zeichnen sich insbesondere durch eine hohe Widerstandsfähigkeit gegenüber äußeren Verunreinigungen, wie beispielsweise Mineralöl aus, und gelangen beispielsweise im Zusammenhang mit Buchsen oder Lager zum Einsatz, wie dies beispielsweise für die Ausführungsbeispiele gemäß Fig. 7, Fig. 8 oder Fig. 11 der Fall ist.

Bei dem Beispiel 7 wird ein Grundkörper 2 eines elastischen Verbundelements 2 mit guten energieabsorbierenden Eigenschaften zur Verfügung gestellt, wobei derartige Materialeigenschaften insbesondere für die in Fig. 13 und 14 gezeigten Hohlfedern Verwendung finden.

### Herstellungsverfahren eines erfindungsgemäßen Verbundelements 1:

Die Herstellung des flammgeschützten dynamisch beanspruchten Verbundelements 1 kann mit verschiedenen dem Fachmann bekannten Herstellungsverfahren erfolgen. Die erforderliche Schichtdicke der Beschichtung 4 kann durch Kalandrieren oder Extrudieren oder durch direktes Spritzen (IM) oder Pressen (TM, CM) auf den zu beschichtenden Unterbau bzw. Grundkörper 2 erreicht werden.

Die Aufbringung der Beschichtung 4 kann in diversen Pressverfahren erfolgen:
Zum einen kann auf einen Vorformling der Kautschukmischung, hergestellt durch Extrusion (z. B. Barwell) oder durch Streifenzuschnitt direkt vom Walzwerk die Schutzschichtmischung der Zusammensetzung durch Konfektion aufgebracht werden. Anschließend kann das Halbfabrikat im Compression-Moulding-Verfahren gemeinsam vulkanisiert werden.

Alternativ kann ein vorvulkanisierter oder vulkanisierte Artikel nach entsprechender Vorbehandlung der Oberfläche 3, z.B. Waschen mit Lösungsmittel oder/und Aufrauen und gegebenenfalls Beschichten mit Bindemittel, mit der noch unvulkanisierten erfindungsgemäßen Zusammensetzung bzw. Beschichtung 4 belegt oder umspritzt werden und diese auf den zu schützenden Artikel bzw. Grundkörper 2 vulkanisiert werden.

Flächige Produkte mit oder ohne festigkeitsfördernde Einlagen können mit z.B. Kalanderbahnen aus der erfindungsgemäßen Brandschutzmischung belegt werden und unter Druck in Pressen oder Autoklaven vulkanisiert werden.

Bei der Herstellung von z.B. Schläuchen oder Profilen durch Extrusion kann die erfindungsgemäße Brandschutzmischung mittels eines zweiten Extruders kontinuierlich auf den extrudierten und zu schützenden Kern bzw. Grundkörper 2 aufgebracht und gemeinsam mit diesem vulkanisiert werden.

Das vorteilhafte Schwefelvernetzungssystem gestattet hierbei, wie auch bei allen anderen Verfahren, die Vulkanisationsgeschwindigkeiten des Grundkörpers 2 und der aufgebrachten Schutzmischung so anzupassen, dass eine optimale Covulkanisation und damit Verbindung ermöglicht wird. Gleichzeitig können alle, bei der Extrusion üblichen kontinuierlichen Vulkanisationsstrecken verwendet werden, z.B. UHF, HL, IR, Salzbad.

Die Vulkanisation erfolgt bei einer Temperatur von unter 200°C, vorzugsweise bei 130 bis 170°C. Die Vulkanisationszeiten hängen vom Herstellungsverfahren und von der Geometrie des Bauteils ab. Im Fall der gemeinsamen Covulkanisation bestimmt auch die Vulkanisationscharakteristik des verwendeten Kernmaterials die Heizbedingungen, wobei diese dem Fachmann bekannt sind.

### Herstellungsbeispiel für ein Verbundelement 1

Im nachfolgenden Herstellungsbeispiel wird als Verbundelement 1 ein elastisches Lager der Abmessung 100 x 100 x 50 mm gefertigt. Die Kernmischung des Grundkörpers 2 ist eine Naturkautschukmischung, die im vulkanisierten Zustand folgende Eigenschaften aufweist:

| | |
|---|---|
| Härte: | 60 Shore A (DIN ISO 7619-1) |
| Zugfestigkeit: | 18 N/mm+² (DIN 53504) |
| Reißdehnung: | 470 % (DIN 53504) |
| Federsteifigkeit: | 1702 N/mm |

Die Ermittlung der Federsteifigkeit erfolgt auf einer Universalprüfmaschine zwischen zwei planparallen Druckplatten. Der Bestimmung der Federsteifigkeit geht ein fünfmaliges Einfedern bis 20 mm Federweg mit einer Geschwindigkeit von 200 mm/min voraus. Die Federsteifigkeit wird im linearen Bereich zwischen 5 und 10 mm Federweg ermittelt.

Die Kernmischung wird vorvulkanisiert und der gefertigte Kern bzw. Grundkörper 2 weist die Abmessungen 92 x 92 x 42 mm auf. Die Formgebung und Vorvulkanisation erfolgt bei einer Temperatur von 155°C, einer Heizzeit von 40 min und einem Druck von 200 bar im CM-Verfahren in der elektrisch beheizten Presse. Der entformte Kern wird mit Aceton gereinigt und die Schutzschicht (Beispielrezeptur 1) mit einer Dicke von 4 mm allseitig auf den Grundkörper 2 aufgebracht (konfektioniert). Die endgültige Formgebung und Vulkanisation des Verbundes erfolgt im CM-Verfahren bei einer Temperatur von 155 °C, einer Heizzeit von 15 min und bei einem Druck von 200 bar. Nach Vulkanisation wird das Verbundelement 1 bei Raumtemperatur abgekühlt und der Austrieb mechanisch entfernt. Am Verbundlager, bestehend aus Kernmaterial und der Beispielmischung 1, wird die Federsteifigkeit bestimmt (siehe Bedingungen für Kernmaterial).

Die Federsteifigkeit des Verbundelements 1 beträgt 1680 N/mm, liegt also nur geringfügig unterhalb der Federsteifigkeit des Grundkörpers 2. Weiters wird innerhalb der CEN TS 45545-2 die Wärmefreisetzungsrate des Verbundes nach ISO 5660-1 mit MARHE = 66 kW/m² ermittelt.

## Patentansprüche

1. Flammgeschützte, insbesondere zur Beschichtung von Werkstücken geeignete, polymere Zusammensetzung enthaltend
a) ein Vinylacetat-haltiges thermoplastisches Polymer sowie
b) ein Doppelbindungen-enthaltendes, ungesättigtes Elastomer,
als polymere Komponenten, wobei die polymeren Komponenten als homogene Polymermischung vorliegen, und eine ausschließlich durch ein Schwefel- bzw. schwefelhaltiges Vernetzungssystem vulkanisierte Mischungsmatrix ausgebildet ist, wobei sich das Schwefelvernetzungssystem über die gesamte Matrix erstreckt und diese vollständig durchsetzt,
und
c) zumindest ein Flammschutzmittel oder eine Kombination von Flammschutzmitteln.

2. Zusammensetzung nach einem der vorangehenden Ansprüche, **dadurch gekennzeichnet, dass** in der Polymermischung der Anteil des Vinylacetat-haltigen thermoplastischen Polymers unvernetzt vorliegt und der Anteil des Doppelbindungen-enthaltenden, ungesättigten Elastomers zumindest teilweise Schwefel-vulkanisiert und durch Schwefelbrücken, insbesondere mono-, di- und/oder polysulfidische Netzbögen, vernetzt oder teilvernetzt ist, wobei die Polymermischung frei von anderen, insbesondere peroxidischen, Vernetzungen ist.

3. Zusammensetzung nach einem der vorangehenden Ansprüche, **dadurch gekennzeichnet, dass** die Polymermischung als interpenetrierendes Gemenge aus den Ketten des Vinylacetat-haltigen Polymers sowie den schwefelvernetzten Elastomerketten ausgebildet ist und/oder dass die polymeren Komponenten als chemisch weitmaschig vernetzte Raumnetzmoleküle vorliegen.

4. Zusammensetzung nach einem der vorangehenden Ansprüche, **dadurch gekennzeichnet, dass** die Schwefelbrücken sowohl als polysulfidische als auch als mono- und di-sulfidische Netzbögen ausgebildet sind, wobei der Anteil der polysulfidischen Netzbögen zwischen 40 % und 50 %, vorzugsweise 45 %, und der Anteil der mono- und di-sulfidischen Netzbögen zwischen 50 % und 60 %, vorzugsweise 55 %, beträgt, wobei die Angaben in % auf die Gesamtnetzbogendichte bezogen sind.

5. Zusammensetzung nach einem der vorangehenden Ansprüche, **dadurch gekennzeichnet, dass** die polymeren Komponenten miteinander eine im Wesentlichen einphasige Mischung, insbesondere ohne makroskopisch und lichtmikroskopisch sichtbare Phasentrennung, ergeben und/oder dass die Polymermischung frei von dispergierten vulkanisierten Elastomer-Partikeln, insbesondere frei von Elastomer-Partikeln oder Kautschuk-Domänen mit einem mittleren Durchmesser von mehr als 0,5 µm, insbesondere von mehr als 0,1 µm, vorzugsweise von mehr als 0,01 µm, ist.

6. Zusammensetzung nach einem der vorangehenden Ansprüche, **dadurch gekennzeichnet, dass** die vulkanisierte Polymermischung bzw. die Zusammensetzung sowohl im Temperaturbereich der Anwendung als auch im Bereich erhöhter Temperatur, insbesondere kurzfristig auch bei 150 bis 200 °C, elastomere Eigenschaften besitzt bzw. ausschließlich elastomere und keine thermoplastischen Eigenschaften aufweist und die thermoplastischen Eigenschaften in den Hintergrund treten oder überhaupt nicht vorhanden sind,
und/oder
dass die vulkanisierte Polymermischung bzw. die Zusammensetzung im Temperaturbereich bis 200 °C keinen Schmelzpeak, gemessen mit dynamischer Differenzkalorimetrie, aufweist,
und/oder
dass die vulkanisierte Polymermischung bzw. die Zusammensetzung in einem Temperaturbereich von Raumtemperatur bis ca. 200°C einen Verlustfaktor (Verhältnis von Verlust- zu Speichermodul bei dynamischer Scherbeanspruchung) von tan δ < 0,3 aufweist.

7. Zusammensetzung nach einem der vorangehenden Ansprüche, hergestellt bzw. erhältlich durch Mischen der polymeren Komponenten zu einem homogenen Blend und, insbesondere nachfolgender, Einarbeitung der Vernetzungsmittel, der Flammschutzmittel und weiterer Additive und/oder Hilfsstoffe unter Vermeidung einer Vernetzung und/oder Vulkanisation, vorzugsweise bei einer Temperatur von maximal 110 °C, danach Formgebung und Vulkanisation, insbesondere bei erhöhter Temperatur und gegebenenfalls unter Druck, wobei die Vulkanisation nicht unter Scherungsbeanspruchung erfolgt.

8. Zusammensetzung nach einem der vorangehenden Ansprüche, erhältlich durch statische Vulkanisation unter Vermeidung von Scherbeanspruchung bzw. unter Vermeidung von dynamischer Vulkanisation, insbesondere nach erfolgter Formgebung.

9. Zusammensetzung nach einem der vorangehenden Ansprüche, **dadurch gekennzeichnet, dass** die polymeren Komponenten, insbesondere die gesamte Zusammensetzung, halogenfrei sind/ist.

10. Zusammensetzung nach einem der vorangehenden Ansprüche, **dadurch gekennzeichnet, dass** das Vinylacetat-haltige Polymer ein Homopolymer, Copolymer oder Terpolymer des Vinylacetats ist und insbesondere ausgewählt ist aus der Gruppe von Polyvinylacetat (PVAc) oder Ethylenvinylacetat (EVA),
und/oder
dass das Vinylacetat-haltige Polymer eine Schmelztemperatur bzw. einen Beginn des Schmelzbereichs von weniger als 150 °C, vorzugsweise weniger als 100 °C, aufweist,
und/oder
dass das Vinylacetat-haltige Polymer einen Vinylacetat-Anteil von 40 bis 75 Gew.-%, aufweist.

11. Zusammensetzung nach einem der vorangehenden Ansprüche, **dadurch gekennzeichnet, dass** das ungesättigte Elastomer ein Homopolymer, Copolymer oder ein Terpolymer aus bzw. mit Dien-Monomereinheiten ist, insbesondere ein Terpolymer bestehend aus Ethylen, Propylen und einem dienhaltigen Termonomer, vorzugsweise mit einem Termonomer-Anteil von mindestens 2 Gew.-% bis 12 Gew.-% bezogen auf das Terpolymer.

12. Zusammensetzung nach einem der vorangehenden Ansprüche, **dadurch gekennzeichnet, dass** das ungesättigte Elastomer ein Kautschuk mit einer ungesättigten Seitengruppe, insbesondere ein Ethylen-Propylen-Dien-Kautschuk (EPDM) ist, der vorzugsweise nicht-konjugierte, Dien-Monomereinheiten aufweist, ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-iso-Propyliden-2-norbornen, 5-Vinyl-2-norbornen (VNB), wobei der Ethylen-Propylen-Dien-Kautschuk (EPDM) vorzugsweise ein Terpolymer aus Ethylen, Propylen und 5-Ethyliden-2-norbornen (ENB) oder Dicyclopentadien (DCPD) ist.

13. Zusammensetzung nach einem der vorangehenden Ansprüche, **dadurch gekennzeichnet, dass** das ungesättigte Elastomer ein Kautschuk der R-Gruppe mit ungesättigter Hauptkette, insbesondere ein teilhydrierter Acrylnitrilbutadien-Kautschuk (HNBR), ist, wobei das ungesättigte Elastomer teilhydriert ist und einen Hydrierungsgrad von 94 bis 97 % aufweist und damit vor der Vernetzung einen Restdoppelbindungsanteil von 3 bis 6 % in der Hauptkette, bezogen auf den Ausgangsdoppelbindungsgehalt in der Hauptkette besitzt.

14. Zusammensetzung nach einem der vorangehenden Ansprüche, **dadurch gekennzeichnet, dass** der am Aufbau der Schwefelbrücken beteiligte Schwefel in einer Menge von 0,3 phr bis 2 phr (parts per hundred rubber), bezogen auf die Gesamtmenge der polymeren Komponenten, enthalten ist,
und/oder
dass Schwefel in einer Menge von mindestens 0,5 phr bezogen auf die Gesamtmenge der polymeren Komponenten enthalten ist.

15. Zusammensetzung nach einem der vorangehenden Ansprüche, **dadurch gekennzeichnet, dass** das unvernetzte Vinylacetat-haltige Polymer in einer Menge von 5 bis 15 Gew.-%, vorzugsweise 7 bis 12 Gew.-%, und das ungesättigte Elastomer in einer Menge von 20 bis 40 Gew.-%, vorzugsweise 20 bis 30 Gew.-%, jeweils bezogen auf die gesamte Zusammensetzung, enthalten ist,
und/oder
dass die Polymermischung aus unvernetztem Ethylenvinylacetat (EVA) und schwefelvernetztem Ethylen-Propylen-Dien-Kautschuk (EPDM) als polymeren Komponenten besteht, insbesondere in einem Verhältnis von 40 bis 20 Gew.-% EVA zu 60 bis 80 Gew.-% EPDM, vorzugsweise etwa 20 bis 30 Gew.-% EVA zu 70 bis 80 Gew.-% EPDM.

16. Zusammensetzung nach einem der vorangehenden Ansprüche, **dadurch gekennzeichnet, dass** zumindest ein Polyolefin, insbesondere Polyethylen, vorzugsweise LLDPE, oder Polypropylen, als weitere polymere Komponenten enthalten sind.

17. Zusammensetzung nach einem der vorangehenden Ansprüche, **dadurch gekennzeichnet, dass** das/die Flammschutzmittel in einer Menge von 50 bis 80 Gew.-%, vorzugsweise 60 bis 70 Gew.-%, bezogen auf die gesamte Zusammensetzung, enthalten ist/sind,
und/oder
dass als Flammschutzmittel Magnesiumhydroxid (MDH), Aluminiumhydroxid (ATH) und/oder Zinkborat, vorzugsweise eine Mischung davon, zugesetzt sind und/oder dass die Flammschutzmittel fest und pulverförmig oder kristallin sind.

18. Zusammensetzung nach einem der vorangehenden Ansprüche mit folgender Zusammensetzung:
- Vinylacetat-haltiges Polymer, insbesondere Ethylenvinylacetat (EVA): 5-15 Gew.-%
- ungesättigtes Elastomer, insbesondere Ethylen-Propylen-Dien-Kautschuk (EPDM): 20-40 Gew.-%
- Flammschutzmittel: 50-70 Gew.-%
- Rest Hilfsstoffe, Additive etc.

19. Zusammensetzung nach einem der vorangehenden Ansprüche, **dadurch gekennzeichnet, dass** sie eine Härte von 50 bis 75, vorzugsweise 55 bis 65, Shore A und/oder eine Reißdehnung von 200 bis 600%, vorzugsweise von 350 bis 600% und/oder einen Weiterreißwiderstand von > 7 N/mm, vorzugsweise > 9 N/mm aufweist.

20. Verfahren zur Herstellung einer Zusammensetzung gemäß einem der vorangehenden Ansprüche, indem
- zuerst die polymeren Komponenten, das/die Vernetzungsmittel, das/die Flammschutzmittel und gegebenenfalls weitere Additive und Hilfsstoffe unter Vermeidung einer Vernetzung und/oder Vulkanisation zu einem homogenen Blend gemischt werden,
- dann ein Schritt der Formgebung erfolgt,
- und dann, frühestens während oder am Ende der Formgebung, insbesondere nach abgeschlossener Formgebung, die Vulkanisation als statische, nicht-dynamische Vulkanisation unter Vermeidung von Scherspannung durchgeführt wird.

21. Verfahren nach Anspruch 20, **dadurch gekennzeichnet, dass** die Erstellung der Mischung vor der Formgebung bei einer für die vorzeitige Vulkanisation unkritischen Temperatur und Zeit insbesondere bei einer Temperatur von maximal 125 °C, vorzugsweise im Bereich von 50 °C bis maximal 110 °C, durchgeführt wird und/oder dass der Blend bzw. die polymeren Komponenten während der Mischung in einem erweichten Zustand vorliegen,
und/oder
dass die Formgebung bei einer für die vorzeitige Vulkanisation unkritischen Temperatur und Zeit durchgeführt wird, insbesondere bei einer Temperatur von maximal 130 °C, insbesondere im Bereich von 70 °C bis 100 °C, erfolgt,
und/oder
dass die Vulkanisation bei einer Temperatur von maximal 200 °C, insbesondere im Bereich von 130 °C bis 170 °C, erfolgt, vorzugsweise bei einer im Vergleich zur Mischung und/oder Formgebung höheren Temperatur, insbesondere bei einem Druck von 100 bis 200 bar, erfolgt.

22. Zusammensetzung, insbesondere nach einem der Ansprüche 1 bis 19, erhältlich durch ein Verfahren nach einem der Ansprüche 20 bis 21.

23. Flammgeschützter Artikel, umfassend die oder bestehend aus der Zusammensetzung nach einem der vorangehenden Ansprüche.

24. Elastisches flammgeschütztes Verbundelement (1), geeignet zur Schwingungsdämpfung und Federung, mit einem Grundkörper (2), der zumindest teilweise oder abschnittsweise, an seiner äußeren Oberfläche (3), gegebenenfalls an seiner gesamten äußeren Oberfläche (3), mit zumindest einer Beschichtung (4) aus der Zusammensetzung gemäß einem der vorangehenden Ansprüche versehen ist.

25. Verbundelement (1) nach Anspruch 24, **dadurch gekennzeichnet, dass** der Grundkörper (2) zum überwiegenden Teil aus Gummi bzw. Kautschuk, beispielsweise aus Polybutadienkautschuk, Styrolbutadienkautschuk, Acrylilnitrilkautschuk, Ethylen-Propylen-Dien-Kautschuk, Moosgummi oder Mischungen hievon, vorzugsweise aus Naturkautschuk, gebildet ist.

26. Verbundelement (1) nach Anspruch 24 oder 25, **dadurch gekennzeichnet, dass** die Beschichtung (4) fest und untrennbar mit dem Grundkörper (2) verbunden ist, wobei die Beschichtung (4) auf dem Grundkörper (2) vorzugsweise durch Konfektion, Extrusion, Pressen, Spritzen und nachfolgende Co-Extrusion aufgebracht ist,
und/oder
dass die Beschichtung (4) eine Dicke von weniger als 10 mm, insbesondere 1 bis 5 mm, aufweist,
und/oder
dass die Beschichtung (4) einen Gewichtsanteil von 1 bis 20 Gew.-%, insbesondere 2 bis 16 Gew.-%, des elastischen Verbundelements (1) aufweist.

27. Verbundelement (1) nach einem der Ansprüche 24 bis 26, **dadurch gekennzeichnet, dass** der Grundkörper (2) mit einer Armierung, beispielsweise Fasern, insbesondere Glasfasern, Kunststofffasern, CFK-Fasern, GFK-Fasern, einem Stoff bzw. Gewebe oder dgl. versehen ist.

28. Verwendung des Artikels oder des elastischen Verbundelements (1) gemäß einem der vorangehenden Ansprüche als Federelement, Dämpfungselement, Dichtung, Schlauch, Matte, Formteil, Schutzbekleidung, als Elastomerprofil, insbesondere für Fenster, etc. oder als Bestandteil hiervon.

## Claims

1. Flame-resistant polymer composition, in particular suited for coating workpieces, containing:
a) a thermoplastic polymer containing vinyl acetate and
b) an unsaturated elastomer containing double bonds,
as polymer components, whereby the polymer components are a homogeneous mixture and a mixture matrix vulcanised only with a sulphur or sulphur-containing crosslinking system is formed, whereby the sulphur crosslinking system extends over the entire matrix and completely pervades it,
and
c) at least one flame retardant or a combination of flame retardants.

2. Composition according to any of the foregoing claims, **characterised in that**, in the polymer mixture, the thermoplastic polymer containing vinyl acetate is non-crosslinked, and the unsaturated elastomer containing double bonds is at least partially sulphur-vulcanised and crosslinked in whole or in part via sulphur bonds, in particular mono-, di-, and/or polysulphide bonds whereby the polymer mixture remains free of other, in particular peroxide, crosslinks.

3. Composite according to any of the foregoing claims, **characterised in that** the polymer mixture is formed as an interpenetrating mixture of the chains of the polymer containing vinyl acetate as well as the sulphur-crosslinked elastomer chains, and/or the polymer components are present as wide-meshed chemically crosslinked spatial network molecules.

4. Composition according to any of the foregoing claims, characterised n that the sulphur bonds consist of both polysulphide and mono-and di-sulphide bonds, whereby the content of the polysulphide bonds is between 40 and 50 %, preferably 45 %, and the content of the mono- and di-sulphide bonds is between 50 and 60 %, preferably 55 %, relative to the total crosslink density.

5. Composition according to any of the foregoing claims, **characterised in that** the polymer components are in a substantially monophasic mixture, in particular without phase separations visible macroscopically or by light microscope, and/or that the polymer mixture is free of dispersed vulcanised elastomer particles, in particular free of elastomer particles or rubber domains with a mean diameter of more than 0.5, in particular more than 0.1 micron, preferably more than 0.01 microns.

6. Composition according to any of the foregoing claims, **characterised in that** the vulcanised polymer mixture or composition has elastomeric properties, or exclusively elastomeric properties and no thermoplastic properties, both in the temperature range of use and at elevated temperatures, for short periods 150 - 200 °C, and the thermoplastic properties become secondary or are totally absent,
and/or that the vulcanised polymer mixture or composition has no melting peak measured by dynamic differential calorimetry in the temperature range of up to 200 °C,
and/or that the vulcanised polymer mixture or composition has a loss factor (ratio of loss to storage modulus in dynamic shearing stress) of tan δ < 0.3 no melting peak measured by dynamic differential calorimetry in the temperature range of up to 200°C.

7. Composition according to any of the foregoing claims produced or obtainable by mixing the polymer components into a homogeneous blend, and, in particular, subsequent incorporation of the sulphur crosslinking agents, the flame retardants, and any other additives and/or excipients, whilst strictly avoiding any crosslinking and/or vulcanisation, preferably at a temperature of no more than 110 °C, followed by moulding and vulcanisation, in particular at elevated temperature and, if applicable, under pressure, whereby the vulcanisation does not occur under shearing stress.

8. Composition according to any of the foregoing claims, obtainable by static vulcanisation, avoiding shearing stress or dynamic vulcanisation, in particular following moulding.

9. Composition according to any of the foregoing claims, **characterised in that** the polymer components, in particular the entire composition, are free of halogen.

10. Composition according to any of the foregoing claims, **characterised in that** the polymer containing vinyl acetate to be a homopolymer, copolymer, or terpolymer of vinyl acetate, and in particular to be selected from the group of polyvinyl acetate (PVAc) or ethylene vinyl acetate (EVA),
and/or that the polymer containing vinyl acetate to have a melting point or a melting range beginning at less than 150 °C, preferably less than 100 °C,
and/or that the polymer containing vinyl acetate has a vinyl acetate content of 40 - 75 wt %.

11. Composition according to any of the foregoing claims, **characterised in that** the unsaturated elastomer is a homopolymer, copolymer, or a terpolymer consisting of or containing diene monomer units, in particular a terpolymer consisting of ethylene, propylene, and a termonomer containing diene, preferably with a termonomer content of at least 2 - 12 wt % relative to the terpolymer.

12. Composition according to any of the foregoing claims, **characterised in that** the unsaturated elastomer is a rubber with an unsaturated side group, in particular an ethylene-propylene-diene rubber (EPDM) containing non-conjugated diene monomer units, selected from the group of 1,3-butadiene, 2-methyl-1,3-butadiene (isoprene), 2,3- dimethyl-1,3-butadiene, 1,3-pentadiene, 1,3-cyclopentadiene, dicyclopentadiene, 2-methyl-1,3-pentadiene, 1,3-hexadiene, 1,4-hexadiene, 1,4-cyclohexadiene, tetrahydroindene, methyl tetrahydroindene, ethylidene norbornene or 5-ethylidene-2-norbornene (ENB), 5-methylene-2-norbornene (MNB), 1,6 octadiene, 5-methyl-1,4-hexadiene, 3,7-dimethyl-1,6-octadiene, 5-isolpropylidene-2-norbornene, 5-vinyl-norbornene (VNB), wherein the ethylene-propylene-diene rubber (EPDM) is preferably a terpolymer consisting of ethylene, propylene, and 5-ethylidene-2-norbornene (ENB) or dicyclopentadiene (DCPD).

13. Composition according to any of the foregoing claims, **characterised in that** the unsaturated elastomer is a rubber of the R group with an unsaturated main chain, in particular a partially hydrated acrylonitrile butadiene rubber (HNBR), whereby the unsaturated elastomer is partially hydrated and has a degree of hydration of 94 - 97 %, and thus, before crosslinking, has a residual double bond content of 3 - 6 % in the main chain relative to the initial double bond content in the main chain.

14. Composition according to any of the foregoing claims, **characterised in that** the sulphur contained in the structure of the sulphur bonds to be contained in an amount of 0,3 - 2 phr (parts per hundred rubber) relative to the total amount of polymer components,
and/or that sulphur is contained in an amount of at least 0.5 phr relative to the total amount of polymer components.

15. Composition according to any of the foregoing claims, **characterised in that** that the non-crosslinked polymer containing vinyl acetate is present in an amount of 5 - 15 wt %, in preferably 7 - 12 wt %, and the unsaturated elastomer is present in an amount of 20 - 40 wt %, in particular 20 - 30 wt %, relative in each case to the total weight of the composition,
and/or that the polymer mixture consists of non-crosslinked ethylene vinyl acetate (EVA) and sulphur-crosslinked ethylene-propylene-diene rubber (EPDM) as polymer components, in particular at a ratio of 40 - 20 wt % EVA to 60 - 80 wt % EPDM, preferably approximately 20 - 30 wt % EVA to 70 - 80 wt % EPDM.

16. Composition according to any of the foregoing claims, **characterised in that** at least one polyolefin, in particular polyethylene, preferably LLDPE, or polypropylene, is included as additional polymer components.

17. Composition according to any of the foregoing claims, **characterised in that** the flame retardant(s) are present in an amount of 50 -80 wt %, preferably 60 - 70 wt %, relative to the overall composition,
and/or that magnesium hydroxide (MDH), aluminium hydroxide (ATH), and/or zinc borate, preferably a mixture thereof, are added and/or the flame retardants are solid and powdery or crystalline.

18. Composition according to any of the foregoing claims having the following composition:
- Polymer containing vinyl acetate, in particular ethylene vinyl acetate (EVA): 15 wt %
- Unsaturated elastomer, in particular ethylene-propylene-diene rubber (EPDM): 40 wt %
- Flame retardants: 50 - 70 wt %
- Remainder: Excipients, additives, etc.

19. Composition according to any of the foregoing claims, **characterised in that** it has a hardness of 50 - 75, preferably 55 - 65, Shore A, and/or an ultimate elongation of 200 - 600 %, preferably 350 - 600 % and/or a tear resistance of > 7 N/mm, preferably > 9 N/mm.

20. Method for producing a composition according to any of the foregoing claims, by
- first mixing the polymer components, the crosslinking agent(s), the flame retardant(s), and any additional additives and excipients into a homogeneous blend whilst avoiding crosslinking and/or vulcanisation,
- followed by a step of moulding,
- no earlier than during or at the end of moulding, in particular after completing the moulding process, is the vulcanisation carried out, as a static, non-dynamic vulcanisation that avoids shearing.

21. Method according to claim 20, **characterised in that** the production of the mixture is carried out before moulding at a non-critical temperature and time for premature vulcanisation, in particular a temperature of no more than 125 °C, preferably 50 - 110 °C, and/or the blend or polymer components are in a softened state during mixing,
and/or that the moulding is carried out at a temperature and time not critical for premature vulcanisation, in particular at a temperature of no more than 130 °C, in particular 70 - 100 °C,
and/or that the vulcanisation occurs at a temperature of no more than 200 °C, in particular 130 - 170 °C, preferably at a higher temperature than the mixing or moulding, in particular at a pressure of 100 - 200 bar.

22. Composition, in particular according to any of claims 1 - 19, obtainable by a method according to any of claims 20 - 21.

23. Flame-retardant article comprising or consisting of the composition according to any of the foregoing claims.

24. Elastic flame-retardant composite element (1), suited for vibration damping and suspension, having a base (2) that has a coating (4) consisting of the composition according to any of the foregoing claims in at least some parts or sections of its outer surface (3), or on the entire outer surface (3) according to any of the preceding claims.

25. Composite element (1) according to claim 24, **characterised in that** the base (2) consists primarily of rubber, e.g., polybutadiene rubber, styrene butadiene rubber, acrylonitrile rubber, ethylene-propylene-diene rubber, sponge rubber, or mixtures thereof, preferably of natural rubber.

26. Composite element (1) according to claim 24 or 25, **characterised in that** the coating (4) is attached to the base (2) in a fixed and inseparable manner, whereby the coating (4) is applied to the base (2) preferably by manufacture, extrusion, pressing, spraying, and subsequent coextrusion,
and/or that the coating (4) has a thickness of less than 10 mm, in particular 1 - 5 mm,
and/or that the coating (4) has a weight percentage of 1 - 20 wt %, in particular 2 - 16 wt % of the elastic composite element (1).

27. Composite element (1) according to any of claims 24 - 26, **characterised in that** the base (2) has a reinforcement, e.g., fibres, in particular glass fibres, polymer fibres, CFK fibres, GFK fibres, a fabric, etc.

28. Use of the article or elastic composite element (1) according to any of the foregoing claims as a spring element, damping element, gasket, hose, mat, moulding, protective clothing, elastomer profile, in particular for a window, etc., or a component thereof.

## Revendications

1. Composition polymère ignifugée, convenant en particulier au revêtement de pièces en oeuvre, contenant
a) un polymère thermoplastique contenant de l'acétate de vinyle, ainsi que
b) un élastomère insaturé contenant des doubles liaisons,
en tant que composants polymères, les composants polymères se présentant sous la forme d'un mélange homogène de polymères, et une matrice de mélange, vulcanisée exclusivement grâce à un système de réticulation au soufre ou contenant du soufre, étant alors réalisée, le système de réticulation au soufre s'étendant sur la totalité de la matrice et la traversant complètement, et
c) au moins un agent d'ignifugation ou une combinaison d'agents d'ignifugation.

2. Composition selon l'une des revendications précédentes, **caractérisée en ce que**, dans le mélange de polymères, la part du polymère thermoplastique contenant de l'acétate de vinyle est présente sous forme non réticulée, et la part de l'élastomère insaturé contenant des doubles liaisons est au moins partiellement vulcanisée au soufre et réticulée ou partiellement réticulée par des ponts soufrés, en particulier des chaînes mono-, di- et/ou polysulfures, le mélange de polymères étant exempt d'autres réticulations, en particulier peroxydiques.

3. Composition selon l'une des revendications précédentes, **caractérisée en ce que** le mélange de polymères est configuré sous forme d'un mélange interpénétrant, obtenu à partir des chaînes du polymère contenant de l'acétate de vinyle et des chaînes polymères réticulées au soufre, et/ou que les composants polymères sont présents sous forme de molécules réticulaires tridimensionnelles à réticulation chimique à grosses mailles.

4. Composition selon l'une des revendications précédentes, **caractérisée en ce que** les ponts soufrés sont configurés sous forme de chaînes tant polysulfures que mono- et disulfures, la part des chaînes polysulfures étant comprise entre 40 % et 50 %, et étant de préférence de 45 %, et la part des chaînes mono- et disulfures étant comprise entre 50 % et 60 %, et étant de préférence de 55 %, les indications en pourcentage étant rapportées à la densité totale des chaînes du réseau.

5. Composition selon l'une des revendications précédentes, **caractérisée en ce que** les composants polymères donnent, les uns avec les autres, un mélange essentiellement monophasique, en particulier sans séparation des phases visibles à l'oeil nu et au microscope optique, et/ou que le mélange de polymères est exempt de particules élastomères vulcanisées dispersées, en particulier exempt de particules élastomères ou de domaines de caoutchouc ayant un diamètre moyen supérieur à 0,5 µm, en particulier supérieur à 0,1 µm, de préférence supérieur à 0,01 µm.

6. Composition selon l'une des revendications précédentes, **caractérisée en ce que** le mélange de polymères vulcanisé, ou la composition, possède tant dans la plage de températures de l'application que dans la plage de températures élevées, en particulier sur de courtes durées, et même à 150 à 200°C, des propriétés élastomères, ou présente exclusivement des propriétés élastomères et ne présente aucune propriété thermoplastique, et que les propriétés thermoplastiques se trouvent en arrière-plan, voire ne sont pas présentes du tout,
et/ou
que le mélange de polymères vulcanisé ou la composition ne présente dans la plage de températures allant jusqu'à 200°C aucun pic de fusion, mesuré par calorimétrie différentielle dynamique,
et/ou
que le mélange de polymères vulcanisé ou la composition présente dans une plage de températures allant de la température ambiante à environ 200°C un facteur de perte (rapport entre le module de perte et le module de stockage lors d'une contrainte de cisaillement dynamique) de tan δ < 0,3.

7. Composition selon l'une des revendications précédentes, fabriquée ou pouvant être obtenue par mélange des composants polymères conduisant à un mélange homogène, et en particulier par incorporation ultérieure des agents de réticulation, des agents d'ignifugation et d'autres additifs et/ou adjuvants destinés à éviter une réticulation et/ou une vulcanisation, à une température maximale de 110°C, puis façonnage et vulcanisation, en particulier à haute température et éventuellement sous pression, la vulcanisation n'étant pas réalisée en présence d'une contrainte de cisaillement.

8. Composition selon l'une des revendications précédentes, pouvant être obtenue par une vulcanisation statique, en évitant une contrainte de cisaillement, ou en évitant une vulcanisation dynamique, en particulier après une opération de façonnage.

9. Composition selon l'une des revendications précédentes, **caractérisée en ce que** les composants polymères, en particulier la composition dans son ensemble, sont exempts d'halogènes.

10. Composition selon l'une des revendications précédentes, **caractérisée en ce que** le polymère contenant de l'acétate de vinyle est un homopolymère, un copolymère ou un terpolymère de l'acétate de vinyle et en particulier est choisi dans le groupe du poly(acétate de vinyle) (PVAc) ou de l'éthylène-acétate de vinyle (EVA),
et/ou
que le polymère contenant de l'acétate de vinyle présente une température de fusion, ou un début de la plage de fusion, inférieur à 150°C, de préférence inférieur à 100°C,
et/ou
que le polymère contenant de l'acétate de vinyle présente une proportion d'acétate de vinyle de 40 à 75 % en poids.

11. Composition selon l'une des revendications précédentes, **caractérisée en ce que** l'élastomère insaturé est un homopolymère, un copolymère ou un terpolymère constitué de motifs monomères diéniques ou comportant des motifs monomères diéniques, en particulier un terpolymère constitué d'éthylène, de propylène et d'un termonomère diénique, présentant de préférence une proportion du termonomère d'au moins 2 % en poids à 12 % en poids par rapport au terpolymère.

12. Composition selon l'une des revendications précédentes, **caractérisée en ce que** l'élastomère insaturé est un caoutchouc comportant un groupe latéral insaturé, en particulier un caoutchouc éthylène-propylène-diène (EPDM), qui de préférence comprend des motifs monomères diéniques non conjugués choisis dans le groupe consistant en le 1,3-butadiène, le 2-méthyl-1,3-butadiène (isoprène), le 2,3-diméthyl-1,3-butadiène, le 1,3-pentadiène, le 1,3-cyclopentadiène, le dicyclopentadiène, le 2-méthyl-1,3-pentadiène, le 1,3-hexadiène, le 1,4-hexadiène, le 1,4-cyclohexadiène, le tétrahydroindène, le méthyltétrahydroindène, l'éthylidènenorbornène ou le 5-éthylidène-2-norbornène (ENB), le 5-méthylène-2-norbornène (MNB), le 1,6-octadiène, le 5-méthyl-1,4-hexadiène, le 3,7-diméthyl-1,6-octadiène, le 5-iso-propylidène-2-norbornène, le 5-vinyl-2-norbornène (VNB), le caoutchouc éthylène-propylène-diène (EPDM) étant de préférence un terpolymère de l'éthylène, du propylène et du 5-éthylidène-2-norbornène (ENB) ou du dicyclopentadiène (DCPD).

13. Composition selon l'une des revendications précédentes, **caractérisée en ce que** l'élastomère insaturé est un caoutchouc du groupe R comportant une chaîne principale insaturée, en particulier un caoutchouc acrylonitrile-butadiène partiellement hydrogéné (HNBR), l'élastomère insaturé étant partiellement hydrogéné et présentant un degré d'hydrogénation de 94 à 97 %, et possédant ainsi, avant la réticulation, une proportion de doubles liaisons résiduelles de 3 à 6 % dans la chaîne principale, par rapport à la teneur initiale en doubles liaisons de la chaîne principale.

14. Composition selon l'une des revendications précédentes, **caractérisée en ce que** le soufre participant à la constitution des ponts soufres est présent en une quantité de 0,3 phr à 2 phr (parties pour 100 parties de caoutchouc), par rapport à la quantité totale des composants polymères,
et/ou
que le soufre est présent en une quantité d'au moins 0,5 phr par rapport à la quantité totale des composants polymères.

15. Composition selon l'une des revendications précédentes, **caractérisée en ce que** le polymère non réticulé contenant de l'acétate de vinyle est présent en une quantité de 5 à 15 % en poids, de préférence de 7 à 12 % en poids, et que l'élastomère insaturé est présent en une quantité de 20 à 40 % en poids, de préférence de 20 à 30 % en poids, dans chaque cas par rapport à la composition totale,
et/ou
que le mélange de polymères est constitué d'éthylène-acétate de vinyle (EVA) non réticulé et d'un caoutchouc éthylène-propylène-diène (EPDM) réticulé au soufre, en tant que composants polymères, en particulier selon un rapport de 40 à 20 % en poids d'EVA pour 60 à 80 % en poids d'EPDM, en particulier d'environ 20 à 30 % en poids d'EVA pour 70 à 80 % en poids d'EPDM.

16. Composition selon l'une des revendications précédentes, **caractérisée en ce qu'**au moins une polyoléfine, en particulier du polyéthylène, de préférence du PEBDL, ou du polypropylène, est présent en tant que composants polymères supplémentaires.

17. Composition selon l'une des revendications précédentes, **caractérisée en ce que** le ou les agents d'ignifugation sont présents en une quantité de 50 à 80 % en poids, de préférence de 60 à 70 % en poids, par rapport à la composition totale,
et/ou
que l'on ajoute en tant qu'agent d'ignifugation de l'hydroxyde de magnésium (MDH), de l'hydroxyde d'aluminium (ATH) et/ou du borate de zinc, de préférence un mélange de ceux-ci, et/ou que l'agent d'ignifugation est solide et pulvérulent ou cristallin.

18. Composition selon l'une des revendications précédentes, ayant la composition suivante :
- polymère contenant de l'acétate de vinyle, en particulier éthylène-acétate de vinyle (EVA) : 5-15 % en poids,
- élastomère insaturé, en particulier caoutchouc éthylène-propylène-diène (EPDM) : 20-40 % en poids,
- agent d'ignifugation : 50-70 % en poids,
- le reste, adjuvants, additifs, etc.

19. Composition selon l'une des revendications précédentes, **caractérisée en ce qu'**elle présente une dureté de 50 à 75, de préférence de 55 à 65 Shore A et/ou un allongement à la rupture de 200 à 600 %, de préférence de 350 à 600 %, et/ou une résistance à la déchirure amorcée > 7 N/mm, de préférence > 9 N/mm.

20. Procédé de fabrication d'une composition selon l'une des revendications précédentes, dans lequel
- on mélange d'abord, pour obtenir un mélange homogène et en évitant une réticulation et/ou une vulcanisation, les composants polymères, le ou les agents de réticulation, le ou les agents d'ignifugation et éventuellement des additifs supplémentaires,
- puis on procède à une étape de façonnage,
- puis, au plus tôt au cours ou à la fin du façonnage, en particulier après que le façonnage est terminé, on met en oeuvre la vulcanisation sous forme d'une vulcanisation statique, non dynamique, en évitant des contraintes de cisaillement.

21. Procédé selon la revendication 20, **caractérisé en ce que** l'établissement du mélange est mis en oeuvre, avant le façonnage, à une température et pendant un laps de temps ne présentant aucun caractère critique pour la vulcanisation prématurée, en particulier à une température maximale de 125°C, de préférence comprise dans la plage de 50°C à un maximum de 110°C, et/ou que le mélange ou les composants polymères se présentent pendant l'opération de mélange dans un état ramolli,
et/ou
que le façonnage est réalisé à une température et pendant un laps de temps n'ayant aucun caractère critique pour la vulcanisation prématurée, en particulier à une température maximale de 130°C, en particulier comprise dans la plage de 70°C à 100°C,
et/ou
que la vulcanisation a lieu à une température maximale de 200°C, en particulier comprise dans la plage de 130°C à 170°C, de préférence à une température plus élevée que celle de l'opération de mélange et/ou de façonnage, en particulier sous une pression de 100 à 200 bar.

22. Composition, en particulier selon l'une des revendications 1 à 19, pouvant être obtenue par un procédé selon l'une des revendications 20 à 21.

23. Article ignifugé, comprenant la composition selon l'une des revendications précédentes, ou en étant constitué.

24. Elément composite ignifugé élastique (1) convenant à l'amortissement des oscillations et à l'élasticité, comportant un corps de base (2), qui au moins partiellement ou par segments est sur sa surface extérieure (3), éventuellement sur la totalité de sa surface extérieure (3), pourvu d'au moins un revêtement (4) constitué de la composition selon l'une des revendications précédentes.

25. Elément composite (1) selon la revendication 24, **caractérisé en ce que** le corps de base est pour sa plus grande partie formé à partir de gomme ou de caoutchouc, par exemple de caoutchouc polybutadiène, de caoutchouc styrène-butadiène, de caoutchouc acrylonitrile, de caoutchouc éthylène-propylène-diène, de caoutchouc mousse ou de mélange de ceux-ci, de préférence de caoutchouc naturel.

26. Elément composite (1) selon la revendication 24 ou 25, **caractérisé en ce que** le revêtement (4) est lié fermement et d'une manière inséparable au corps de base (2), le revêtement (4) étant appliqué sur le corps de base (2) de préférence par surmoulage, extrusion, moulage, pistolage, suivi d'une co-extrusion,
et/ou
que le revêtement (4) présente une épaisseur inférieure à 10 mm, en particulier de 1 à 5 mm,
et/ou
que le revêtement (4) présente une proportion pondérale de 1 à 20 % en poids, en particulier de 2 à 16 % en poids de l'élément composite élastique (1).

27. Elément composite (1) selon l'une des revendications 24 à 26, **caractérisé en ce que** le corps de base (2) est pourvu d'une armature, par exemple de fibres, en particulier de fibres de verre, de fibres plastiques, de fibres pour plastique renforcé par des fibres de carbone, de fibres pour plastique renforcé par des fibres de verre, d'une étoffe ou d'un tissu, ou analogues.

28. Utilisation de l'article ou de l'élément composite élastique (1) selon l'une des revendications précédentes en tant qu'élément élastique, élément d'amortissement, étanchéité, tuyau flexible, mat, objet moulé, vêtement de protection, en tant que profilé élastomère, en particulier pour fenêtres, etc., ou en tant que constituant de ceux-ci.
